# EUROPEAN PATENT APPLICATION

(11) **EP 4 773 579 A1**
(43) Date of publication of application: **08.07.2026**
(21) Application number: 24946568.3
(22) Date of filing: 26.12.2024
(51) Int. Cl.: H04L 67/562, G06F 13/20

(54) **WRITE REQUEST PROCESSING METHOD, IO PROXY MODULE, SLAVE PROXY MODULE, AND COMPUTER SYSTEM**

(30) Priority: 13.11.2024 CN 202411615045
(71) Applicant: Hygon Information Technology Co., Ltd., Tianjin 300392 (CN)
(72) Inventor: CHENG, Yongbo, Tianjin 300392 (CN)
(74) Representative: Maiwald GmbH
(86) International application number: PCT/CN2024/142664
(87) International publication number: WO 2026/102876

(57) **Abstract**

Embodiments of the present disclosure provide a write request processing method, an IO agent module, a slave agent module, and a computer system. The method applied to the IO agent module includes: acquiring an IO write request of an IO module; determining cache line overwrite integrity corresponding to a cache line write operation of the **IO** write request; sending an exclusive permission request for a cache line corresponding to the cache line write operation based on the cache line overwrite integrity of the cache line write operation; and when a send order of the IO write request arrives, in response to having acquired the exclusive permission of the cache line corresponding to the cache line write operation of the **IO** write request, sending a full write data request corresponding to the cache line write operation based on full write data corresponding to the cache line; where the full write data request is used to request writing the full write data into the cache line, and the full write data includes at least write data of the cache line write operation.

## Description

The present application claims priority of the Chinese Patent Application No. 202411615045.X, filed on November 13, 2024, the disclosure of which is incorporated herein by reference in its entirety as part of the present application.

### TECHNICAL FIELD

The embodiments of the present disclosure relate to a write request processing method, an I/O agent module, a slave agent module, and a computer system.

### BACKGROUND

The master-slave is a communication mode applied to a computer system, that is, a functional module initiating an access request is a master module, and a functional module responding to the access request of the master module is a slave module. The master module is connected to a transmission network through a corresponding master agent module, and the slave module is connected to the transmission network through a corresponding slave agent module. Thus, the master agent module may send the access request of the master module to the transmission network, and the transmission network further sends the access request to the slave agent module corresponding to the slave module, and the slave agent module schedules the corresponding slave module to execute the access request.

The computer system is required to ensure data consistency, that is, concurrent access requests cannot cause data conflict or data inconsistency, so that data read at any time in the computer system is the latest and accurate. Under this background, as a functional module for data input and output in the computer system, the IO (Input/Output) module has the need to access the slave module such as a Memory, in which the IO write request is used as an access request for writing data sent by the IO module. How to provide a processing solution for the IO write request of the IO module to improve the performance of the transmission network of the computer system while ensuring data consistency has become an urgent technical problem to be solved by those skilled in the art.

### SUMMARY

In view of this, the embodiments of the present disclosure provide a write request processing method, an IO agent module, a slave agent module and a computer system, to improve the performance of the transmission network while ensuring data consistency.

To realize the above purpose, the embodiments of the present disclosure provide the following technical solutions.

In the first aspect, an embodiments of the present disclosure provides a write processing method, which is applied to an IO agent module. Based on a cache coherence protocol, the IO agent module is configured to manage an IO write request of a corresponding IO module by means of cache line. The method comprises:
acquiring an IO write request of an IO module;
determining cache line overwrite integrity corresponding to a cache line write operation of the IO write request;
sending an exclusive permission request for a cache line corresponding to the cache line write operation based on the cache line overwrite integrity of the cache line write operation to acquire at least an exclusive permission of the cache line; and
when a send order of the IO write request arrives, in response to having acquired the exclusive permission of the cache line corresponding to the cache line write operation of the IO write request, sending a full write data request corresponding to the cache line write operation based on full write data corresponding to the cache line; wherein the full write data request is used to request writing the full write data into the cache line, and the full write data includes at least write data of the cache line write operation.

In the second aspect, an embodiment of the present disclosure provides a write request processing method, which is applied to a slave agent module, and includes:
acquiring an exclusive permission request sent by an IO agent module, where the exclusive permission request is at least used to request exclusive permission of a cache line, and the exclusive permission request corresponds to cache line overwrite integrity of a cache line write operation corresponding to the cache line;
feeding back exclusive permission response information corresponding to the exclusive permission request to the IO agent module;
acquiring a full write data request corresponding to the cache line write operation sent by the IO agent module, wherein the full write data request is used to request writing full write data corresponding to the cache line into the cache line, and the full write data includes at least write data of the cache line write operation; and
scheduling a corresponding slave module to execute the full write data request, and feeding back response information of the full write data request to the IO agent module.

In the third aspect, an embodiment of the present disclosure provides an IO agent module, and the IO agent module connects a corresponding IO module and a transmission network of a computer system, and a protocol layer of the IO agent module is set with a cache coherence protocol to manage an IO write request of the corresponding IO module by means of cache line based on the cache coherence protocol. The IO agent module is configured to:
acquire an IO write request of an IO module;
determine cache line overwrite integrity corresponding to a cache line write operation of the IO write request;
send an exclusive permission request for a cache line corresponding to the cache line write operation based on the cache line overwrite integrity of the cache line write operation to acquire at least an exclusive permission of the cache line; and
when a send order of the IO write request arrives, in response to having acquired the exclusive permission of the cache line corresponding to the cache line write operation of the IO write request, send a full write data request corresponding to the cache line write operation based on full write data corresponding to the cache line; where the full write data request is used to request writing the full write data into the cache line, and the full write data includes at least write data of the cache line write operation.

In the fourth aspect, an embodiment of the present disclosure provide a slave agent module, and the slave agent module connects a corresponding slave module and a transmission network of a computer system to manage an access request for the slave module. The slave agent module is configured to:
acquire an exclusive permission request sent by an IO agent module, where the exclusive permission request is at least used to request exclusive permission of a cache line, and the exclusive permission request corresponds to cache line overwrite integrity of a cache line write operation corresponding to the cache line;
feed back exclusive permission response information corresponding to the exclusive permission request to the IO agent module; and
acquire a full write data request corresponding to the cache line write operation sent by the IO agent module, where the full write data request is used to request writing full write data corresponding to the cache line into the cache line, and the full write data includes at least write data of the cache line write operation; and
schedule the corresponding slave module to execute the full write data request, and feed back response information of the full write data request to the IO agent module.

In the fifth aspect, an embodiment of the present disclosure provides a computer system including a plurality of functional modules, and among the plurality of functional modules, a functional module that initiates an access request is a master module, and a functional module that responds to an access request is a slave module; the master module includes an IO module, and the IO module is connected to a transmission network of the computer system through a corresponding IO agent module; the slave module is connected to the transmission network through a corresponding slave agent module; where the IO agent module is the IO agent module according to the third aspect, and the slave agent module is the slave agent module according to the fourth aspect.

In the write request processing method provided by the embodiments of the present disclosure, the IO agent module is configured to, based on the cache coherence protocol, manage the IO write request of the corresponding IO write request by means of cache line. When the IO agent module acquires the IO write request of the IO module, the IO agent module can determine the cache line overwrite integrity corresponding to the cache line write operation of the IO write request, and send the exclusive permission request of the cache line corresponding to the cache line write operation based on the cache overwrite integrity of the cache line write operation, to acquire at least the exclusive permission of the cache line, thus ensuring that before the IO agent module executes the write operation on the cache line corresponding to the cache line write operation, an access to the cache line by other master agent module will be fed back to the IO agent module through an inquiry request corresponding to the cache line, so that the IO agent module can respond to the inquiry request based on a data consistency requirement, to ensure that the data access by other master agent module is the latest and accurate, ensuring the data consistency. Further, when the send order of the IO write request arrives, in response to the IO agent module confirming that the exclusive permission of the cache line corresponding to the cache line write operation of the IO write request has been acquired, the IO agent module can send the full write data request corresponding to the cache line write operation based on the full write data corresponding to the cache line, to request writing the full write data into the cache line, and the full write data includes at least write data of the cache line write operation, to realize the sending of the IO write request.

In the above process, the IO agent module based on the cache coherence protocol, can transfer the order control point (i.e., the order-preserving point) of the IO write request for writing data to the IO agent module by acquiring the exclusive permission of the cache line corresponding to the cache line write operation of the IO write request. Therefore, the embodiments of the present disclosure can release an order-preserving requirement of the transmission network of the computer system for the access requests of the IO module, so that the computer system can adapt to a transmission network having any transmission mechanism, the design restriction of the transmission network is reduced, thereby improving the performance of the transmission network, such as improving utilization rate of the transmission network and throughput of the computer system. Therefore, the embodiments of the present disclosure can release the order-preserving requirement of the transmission network of the computer system for the IO write request to improve the performance of the transmission network while ensuring the data consistency of the computer system.

### BRIEF DESCRIPTION OF DRAWINGS

To explain the technical solutions in the embodiments of the present disclosure more clearly, the following briefly introduces the drawings needed to be used in the embodiment description. Obviously, the drawings in the following description are merely embodiments of the present disclosure. For those of ordinary skill in the art, other drawings may be acquired based on these provided drawings without creative effort.
Fig. 1 is an architecture example diagram of a computer system;
Fig. 2 is an example diagram of performing consecutive write operations on one same slave module;
Fig. 3A is an example diagram of performing consecutive write operations on different slave modules;
Fig. 3B is another example diagram of performing consecutive write operations on different slave modules;
Fig. 4 is a flowchart of a write request processing method provided by an embodiment of the present disclosure;
Fig. 5 is an example diagram of a write request processing method provided by an embodiment of the present disclosure;
Fig. 6A is another example diagram of a write request processing method provided by an embodiment of the present disclosure;
Fig. 6B is another example diagram of a write request processing method provided by an embodiment of the present disclosure;
Fig. 7 is another example diagram of a write request processing method provided by an embodiment of the present disclosure;
Fig. 8 is another example diagram of a write request processing method provided by an embodiment of the present disclosure;
Fig. 9 is another example diagram of a write request processing method provided by an embodiment of the present disclosure; and
Fig. 10 is another example diagram of a write request processing method provided by an embodiment of the present disclosure.

### DETAILED DESCRIPTION

The technical solutions in the embodiments of the present disclosure will be clearly and completely described below in conjunction with the accompanying drawings in the embodiments of the present disclosure. Obviously, the described embodiments are only part of the embodiments of the present disclosure, rather than all the embodiments. Based on the embodiments of the present disclosure, all other embodiments obtained by those of ordinary skill in the art without creative work shall fall within the protection scope of the present disclosure.

A computer system may be set with various types of functional modules, such as a core cluster ( Core Complex), an IO module, a memory, etc. These functional modules have the needs for data access, where a functional module initiating an access request is a master module, and a functional module responding to the access request is a slave module. A computer system may include a plurality of master modules and a plurality of slave modules. Each master module is connected to a transmission network through a corresponding master agent module, and the master agent module is responsible for managing the access request of the corresponding master module; each slave module is connected to the transmission network through a corresponding slave agent module, and the slave agent module is responsible for managing the access request of the transmission network and scheduling the corresponding slave module to execute the access request. That is, a path of an access request in a computer system is as follows: the master agent module sends an access request of the corresponding master module to the transmission network, the transmission network sends the access request from the master agent module to the slave agent module, and the slave agent module schedules the corresponding slave module to execute the access request; where the transmission network is a bus network of a computer system, e.g., a Data Fabric (data interconnection) bus, an on-chip interconnection bus, etc.

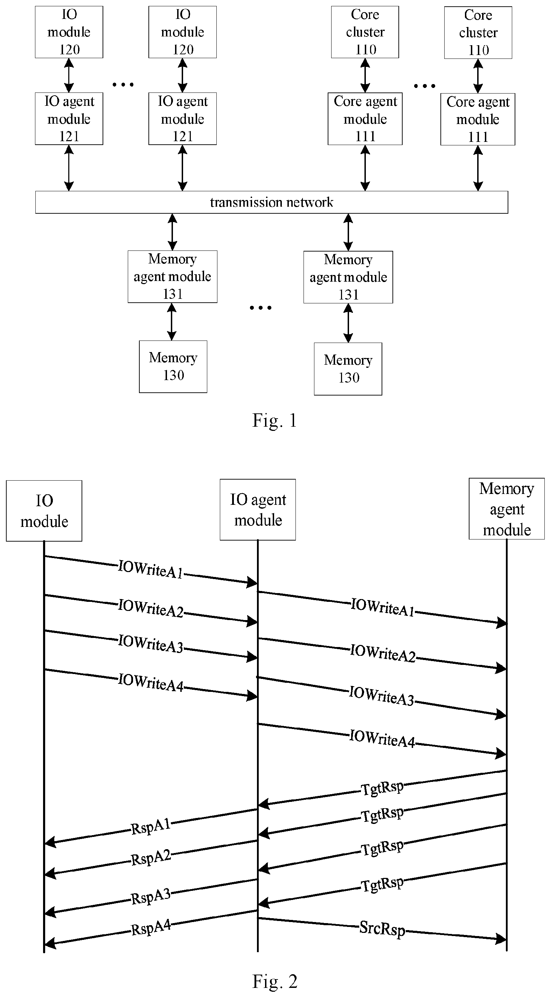

A computer system may be designed based on the multi-core architecture, the heterogeneous architecture, the System-on-Chip architecture, etc. For ease of understanding, using the multi-core architecture of the computer system as an example, Fig. 1 exemplarily illustrates the architecture example diagram of a computer system. As shown in Fig. 1, the computer system may include a plurality of core clusters 110, a plurality of Core agent modules 111, a plurality of IO modules 120, plurality of IO agent modules 121, a plurality of Memories 130 and a plurality of Memory agent modules 131.

For the plurality of core clusters 110, one core cluster is a functional module including a plurality of computing cores, and is used to process computing tasks and instruction operations. For example, the computing core may be a processor core, and then one core cluster may include a plurality of processor cores;
For the plurality of core agent modules 111, each core cluster has a corresponding core agent module, and the core cluster is connected to the transmission network through the corresponding core agent module, thereby interacting with other functional modules in the computer system;
For the plurality of IO modules 120, the IO module is a functional module for data input and output of the computer system, e.g., a Peripheral Component Interconnect Express (PCIE) module, or other peripheral modules of the computer system;
For the plurality of IO agent modules 121, each IO module has a corresponding IO agent module, and the IO module is connected to the transmission network through the corresponding IO agent module, thereby interacting with other functional modules in the computer system;
For the plurality of memories 130, the memory is responsible for storing data for the core cluster and the IO module to read and write data. The memory is, for example, a Double Data Rate (DDR) memory, etc.;
For the plurality of memory agent modules 131, each memory has a corresponding memory agent module, and the memory is connected to the transmission network through the corresponding memory agent module, thereby interacting with other functional modules in the computer system.

The architecture of the above-mentioned computer system relates to the interaction between a core cluster and a memory, the interaction between an IO module and a memory, etc.

For example, for the interaction between a core cluster and a memory, the core cluster initiates an access request for the memory (such as a read request, or a write request), the core agent module corresponding to the core cluster sends the access request to a transmission network (e.g., a Data Fabric bus), the transmission network sends the access request to the memory agent module corresponding to the accessed memory, and the memory agent module schedules the corresponding memory to execute the access request. In the above process, the master module may be regarded as the core cluster, the master agent module may be regarded as the core agent module, the slave module can be regarded as the memory, and the slave agent module can be regarded as the memory agent module.

For example, for the interaction between an IO module and a Memory, the IO module initiates an access request for the memory (such as an IO read request, or an IO write request), the IO agent module corresponding to the IO module sends the access request to a transmission network (e.g., a Data Fabric bus), the transmission network transmits the access request to the memory agent module corresponding to the accessed memory, and the memory agent module schedules the corresponding memory to execute the access request. In the above process, the master module may be regarded as the IO module, the master agent module may be regarded as the IO agent module, the slave module may be regarded as the memory, and the slave agent module may be regarded as the memory agent module.

It can be seen that a functional module that initiates an access request in a computer system is a master module, including but not limited to a core cluster, an IO module, etc.; each master module is connected to a transmission network through a corresponding master agent module, and the master agent module includes but is not limited to a core agent module, an IO agent module, etc.; a functional module that responds to an access request in a computer system is a slave module, the slave module includes but is not limited to a memory, etc..; each slave module is connected to a transmission network through a corresponding slave agent module, and a slave agent module includes but is not limited to a memory agent module, etc.

A computer system needs to maintain data consistency when master modules concurrently access a slave module, that is, concurrent access requests of the master modules for a slave module cannot cause data conflict or inconsistency, and data read at any time should be the latest and correct. Specifically, when one or more master modules access the data of a slave module at the same time, the computer system needs to ensure that read and write operations do not lead to the data conflict, data overwriting, or reading of old data, so that no matter which master module modifies the data of the slave module, the other master modules should be able to read the latest and accurate data subsequently.

The IO module is used as a functional module for data input and output in a computer system. For an IO write request initiated by the IO module (a write request initiated by the IO module is referred to as an IO write request), it is also necessary to process the IO write request of the IO module while ensuring the data consistency in the computer system. One processing method is ensuring the in-order execution of a plurality of IO write requests sent by the IO module in parallel. Specifically, one or more IO modules may concurrently initiate a plurality of IO write requests to one or more slave modules (e.g., memories). At this time, it is necessary to satisfy the in-order execution of the concurrent IO write requests to ensure the data consistency in the computer system.

From the overall perspective of the computer system, the in-order execution of IO write requests is regarded as the global ordering (GO) of the IO write requests. The computer system can use a global order-preserving mechanism, ensuring that the earlier IO write requests are completed first and the subsequent IO write requests can only take effect, to realize the in-order execution of the IO write requests. The earlier IO write request is the IO write request initiated earlier in time, which may also be referred as an older IO write request; the subsequent IO write request is the IO write request initiated later in time, which may also be referred as a younger IO write request. Specifically, the global order-preserving mechanism needs to ensure that the older IO write requests are executed first. Only after the older IO write requests have been completed execution and synchronized to the computer system, the younger IO write requests are visible to other functional modules in the computer system. The other functional modules refer to, for example, functional modules in the computer system other than the ones initiating the younger IO write requests. For example, the younger IO write request is initiated by a certain IO module, then the other functional modules are other core clusters and their corresponding core agent modules, other IO modules and their corresponding IO agent modules, etc. That is, the IO write requests of the IO modules are sent by the IO agent module to the memory agent module through the transmission network, so the IO write requests from the IO agent module to the Memory agent module need to be order-preserved end-to-end.

Regarding the global order-preservation of IO write requests of the IO modules (i.e., the global ordering of the IO write requests of the IO modules), one global order-preserving mechanism is to perform order-preserving processing for the IO write requests in the transmission network of the computer system, where the transmission network may be regarded as the transmission layer of the computer system, corresponding to the transmission path from the master agent module to the slave agent module.

For ease of understanding of the order-preserving processing of the IO write requests in the transmission network (transmission layer), Fig. 2 exemplarily illustrates an example diagram of performing consecutive write operations on one same slave module. Fig. 2 illustrates an example in which the slave module is a memory, primarily explaining from the perspective of interactions among the IO module, the IO agent module and the memory agent module.. As shown in Fig. 2, taking four consecutive write operations of the IO module on the same memory as an example, these four consecutive write operations correspond to four consecutive IO write requests, separately IO WriteAl, IO WriteA2, IO WriteA3, and IO WriteA4. The IO WriteA1 is an IO write request with a write address of A1, the IO WriteA2 is an IO write request with a write address of A2, the IO WriteA3 is an IO write request with a write address of A3, and the IO WriteA4 is an IO write request with a write address of A4. In the example of Fig. 2, the write addresses A1, A2, A3, and A4 are positioned in the same memory;
The four consecutive IO write requests (IO WriteA1, IO WriteA2, IO WriteA3, and IO WriteA4) initiated by the IO module may be transmitted to the IO agent module corresponding to the IO module.

The IO agent module determines the write data size (Write Size) of each IO write request, i.e., the data volume of each IO write request. For example, the IO agent module can determine the write data size of the IO WriteA1 (denoted as IO WriteSizeA1), the write data size of the IO WriteA2 (denoted as IO WriteSizeA2), the write data size of the IO WriteA3 (denoted as IO WriteSizeA3), and the write data size of the IO WriteA4 (denoted as IO WriteSizeA4).

Since the transmission layer realizes the order-preserving processing of IO write requests (e.g., the end-to-end order preservation corresponding to the IO write requests from the IO agent module for the memory agent module), the IO agent module can directly transmit each IO write request to the transmission network (e.g., the Data Fabric bus) in order and continuously. For example, the IO agent module can directly transmit the four IO write requests, the IO WriteA1, the IO WriteA2, the IO WriteA3, and the IO WriteA4, to the transmission network (e.g., the Data Fabric bus) in order and continuously.

The transmission network (e.g., the Data Fabric bus) can enable each IO write request to be transmitted to the memory agent module in order based on the order-preserving processing of the transmission layer. For example, the transmission network may transmit the four IO write requests, the IO WriteA1, the IO WriteA2, the IO WriteA3, and the IO WriteA4, to the memory agent module corresponding to the accessed memory in order, so that the four IO write requests are delivered to the memory in order and executed in order, ensuring the global ordering of the consecutive write operations on the same memory;
When the memory completes the IO write requests, the memory agent module can feed back target response (TgtRsp) information of each IO write request to the IO agent module through the transmission network, to represent that the memory has completed the execution of the IO write request.

Based on the TgtRsp information of the IO write request acquired by the IO agent module, in response to the IO agent module acquiring the TgtRsp information of a certain IO write request, the IO agent module can confirm that the memory has completed the processing of the IO write request, and thus feeds back the corresponding response (Rsp) information to the IO module. For example, in response to the IO agent module confirming that the memory has completed the execution of the IO WriteA1, the IO agent module can feed back RspA1 information to the IO module; in response to the IO agent module confirming that the memory has completed the execution of the IO WriteA2, the IO agent module can feed back RspA2 information to the IO module; in response to the IO agent module confirming that the memory has completed the execution of the IO WriteA3, the IO agent module can feed back RspA3 information to the IO module; and in response to the IO agent module confirming that the memory has completed the execution of the IO WriteA4, the IO agent module can feed back RspA4 information to the IO module.

Further, after the IO agent module feeds back the Rsp information of any IO write request to the IO module, the IO agent module can also feed back source response (SrcRsp) information to the memory agent module through the transmission network, representing that the process of the IO write request has been completed.

However, there may be limitations in the order-preserving processing of the IO write requests of the IO module in the transmission network. For example, although the order-preserving processing of the transmission network can ensure that the IO write requests for consecutive accesses to one same slave module can be executed in order, it may fail to ensure the in-order execution of IO write requests when facing consecutive IO write requests across a plurality of slave modules.

Specifically, the configuration of low address interleave will cause the consecutive write operations to be distributed to different slave modules. Taking accessing the memory as an example, low address interleave is a configuration mode for memory address interleave, which distributes the consecutive memory addresses among a plurality of memories to improve the parallelism and speed of data access, so that a plurality of IO write requests regarding the consecutive memory addresses will be distributed to different memories. Under the configuration of low address interleave, in response to the IO module performing consecutive write operations on different slave modules, the order-preserving mechanism of the transmission network for IO write requests cannot independently ensure the in-order execution of the consecutive IO write requests initiated by the IO module. The reason is that when the transmission network sends the IO write requests to slave agent modules corresponding to different slave modules, the arrival time of the IO write requests may differ due to transmission delays or network congestion, and such differences in the arrival time of the IO write requests may cause the consecutive IO write requests to be executed out of order, thereby undermining the data consistency of the computer system. For example, when the transmission network sends consecutive older IO write requests and younger IO write requests to different slave modules, the younger IO write requests may arrive at the corresponding slave agent modules first and be scheduled for execution due to better network conditions, while the older IO write requests arrive at the corresponding slave agent modules later and are scheduled for execution due to transmission delays or network congestion. Such disorder in the order of the IO write requests arriving at different slave agent modules will undermine the global ordering, thereby affecting the data consistency of the computer system.

Based on this, a solution is as follows: a single-issue processing mechanism with the granularity based on slave is introduced in the IO agent module, that is, the IO agent module, using the slave module as the granularity, must wait until the previous slave module has completed the execution of all IO write requests before sending the IO write requests for the next slave module to the transmission network. Thus, the combination of the single-issue processing mechanism with the slave as the granularity of the IO Agent module and the order-preserving processing of the transmission network for the IO write requests to the same slave module, ensures that consecutive IO write requests across a plurality of slave modules can be executed in order, thereby maintaining the global ordering of IO write requests.

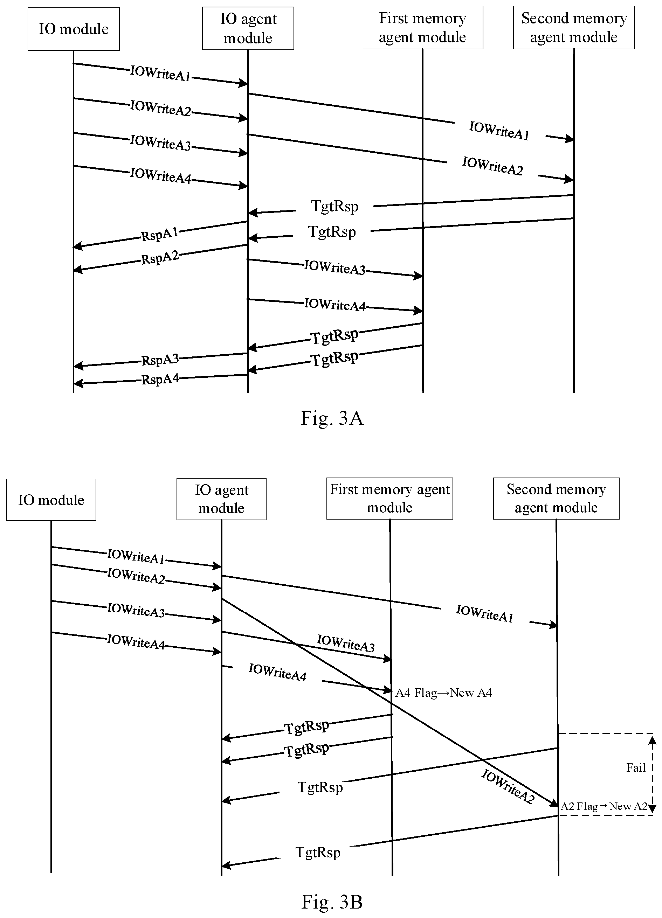

For ease of understanding, Fig. 3A exemplarily illustrates an example diagram of performing consecutive write operations on different slave modules. Fig. 3A illustrates an example in which the slave module is a memory, primarily explaining from the perspective of interactions among the IO module, the IO agent module and the memory agent modules corresponding to a plurality of memories. The plurality of memories relates to a first memory and a second memory. The memory agent module corresponding to the first memory may be the first memory agent module in the example of Fig. 3A, and the memory agent module corresponding to the second memory may be the second memory agent module in the example of Fig. 3A; the corresponding parts of Fig. 3A and Fig. 2 can be referred to each other;
As shown in Fig. 3A, based on the configuration of low address interleave, the four consecutive IO write requests (IO WriteA1, IO WriteA2, IO WriteA3, and IO WriteA4) of the IO module target the second memory and the first memory, where the IO WriteA1 and IO WriteA2 target the second memory, and the IO WriteA3 and IO WriteA4 target the first memory. In the example of Fig. 3A, the consecutive write addresses A1, A2, A3, and A4 are distributed to the second memory and the first memory, the write addresses A1 and A2 are positioned in the second memory, and the write addresses A3 and A4 are positioned in the first memory;
The four consecutive IO write requests (IO WriteA1, IO WriteA2, IO WriteA3, and IO WriteA4) initiated by the IO module can be transmitted to the IO agent module corresponding to the IO module in order. The IO agent module first sends the IO WriteA1 and the IO WriteA2 to the transmission network (e.g., the Data Fabric bus) in order, and the transmission network ensures the ordering of the IO WriteA1 and the IO WriteA2 arriving at the second memory agent module, that is, for consecutive IO write requests to the same memory, the transmission network can ensure the in-order execution of the IO write requests.

For the IO WriteA3 and the IO WriteA4, the IO agent module cannot directly send the IO WriteA3 and the IO WriteA4 to the transmission network, because in response to the IO agent module directly sends the IO WriteA3 and the IO WriteA4 to the transmission network, due to reasons of transmission delays or network congestion of the transmission network, the transmission network cannot ensure that the time when the IO WriteA1 and the IO WriteA2 arrive at the second memory agent module is earlier than the time when the IO WriteA3 and the IO WriteA4 arrive at the first memory agent module, which may undermine the global ordering.

Thus, based on the single-issue processing mechanism with the slave as the granularity of the IO agent module, after sending the IO WriteA1 and the IO WriteA2, the IO agent module must wait until the TgtRsp information is fed back by the second memory agent module through the transmission network; in response to the IO agent module acquiring the TgtRsp information of the IO WriteA1 fed back by the second memory agent module, the IO agent module feeds back RspA1 information to the IO module; in response to the IO agent module acquiring the TgtRsp information of the IO WriteA2 fed back by the second memory agent module, the IO agent module feeds back RspA2 information to the IO module.

After the IO agent module acquires the TgtRsp information of the IO WriteA1 and the IO WriteA2, the IO agent module can confirm that the second memory has completed the execution of the IO WriteA1 and the IO WriteA2. Thus, based on the single-issue processing mechanism with the slave as the granularity, the master agent then sends the IO WriteA3 and the IO WriteA4 to the transmission network (e.g., the Data Fabric bus), and the transmission network ensures the ordering of the IO WriteA3 and the IO WriteA4 arriving at the first memory agent module, that is, for consecutive IO write requests to the same memory, the transmission network can ensure the in-order execution of the IO write requests.

Furthermore, the IO agent module acquires the TgtRsp information transmitted from the first memory agent module through the transmission network. Exemplarily, regarding the processing of the IO WriteA3 and the IO WriteA4 by the first memory, the TgtRsp information fed back by the first memory agent module can be, e.g., the TgtRsp information of the IO WriteA3 and the TgtRsp information of the IO WriteA4; then, the IO agent module respectively feeds back RspA3 information and RspA4 information to the IO module, to respectively represent that the IO WriteA3 and the IO WriteA4 have been processed completely.

It can be seen that the order-preserving processing of the transmission network is effective for consecutive IO write requests with respect to the same slave module, but cannot ensure the in-order execution of consecutive IO write requests across a plurality of slave modules. It is necessary to additionally introduce a single-issue processing mechanism with the slave as the granularity in the IO agent module. Therefore, the order-preserving processing of the transmission network has limitations.

That is, in a case that the IO agent module does not introduce a single-issue processing mechanism with the slave as the granularity, when the IO agent module attempts to send a plurality of consecutive IO write requests to different slave agent modules through the transmission network, relying solely on the order-preserving processing of the transmission network may cause ordering errors, leading to data inconsistency problems in the computer system.

For ease of understanding, on the basis of the example in Fig. 3A, Fig. 3B exemplarily illustrates another example diagram of performing consecutive write operations on different slave modules. Fig. 3B is an example where the single-issue processing mechanism with the slave as the granularity is not introduced for the IO agent module . As shown in conjunction with Fig. 3A and Fig. 3B, in the example of Fig. 3B, the IO agent module directly transmits the four IO write requests, namely IO WriteA1, IO WriteA2, IO WriteA3, and IO WriteA4, to the transmission network (such as Data Fabric bus) in order and continuously.

Since there may be congestion or transmission delays in the transmission network, the time when the IO WriteA1 and the IO WriteA2 arrive at the second memory agent module and the time when the IO WriteA3 and the IO WriteA4 arrive at the first memory agent module may be disordered, causing disorder in the actual execution order of the IO write requests.

Specifically, as shown in conjunction with Fig. 3B, the IO WriteA3 and the IO WriteA4 arrive at the first memory agent module in order and are executed by the first memory, so the first memory processes the IO WriteA4 and writes new data (i.e., New A4). As the first memory executes the IO WriteA4, the old data (Old A4) is updated to the new data (New A4).

For the IO WriteA1 and the IO WriteA2, the IO WriteA2 has a transmission delay, and the IO WriteA2 arrives at the second memory agent module later than the IO WriteA4 arrives at the first memory agent module; and thus, when the first memory executes the IO WriteA4 and updates the Old A4 to the New A4, the IO WriteA2 may not has been executed yet, or may even not has arrived at the second memory agent module. In this case, in response to the other master module and its corresponding master agent modules reading the flag (Flag) data at write address A4, it is considered that the IO WriteA4 has been successfully completed, and expect to acquire the data written by the preceding IO write requests (the IO WriteA1 to the IO WriteA3) of the IO WriteA4, since the IO WriteA2 has not been completed yet, the data acquired by the master agent modules corresponding to other master modules at this time is not the desired new data at the write address A2 (i.e., New A2), but the old data at the write address A2 (i.e., Old A2), causing failing in acquiring (Fail), that is, resulting in the case that the data read in the computer system is not the latest data, unable to satisfy the data consistency of the computer system.

It should be explained that in the example of Fig. 3B, New A2 represents the new data at the write address A2. As the second memory executes the IO WriteA2, the old data (Old A2) is updated to the new data (New A2). It can be seen from the example of Fig. 3B that when the Flag data at the write address A4 is generated and Old A4 is updated to New A4 (i.e., when the IO WriteA4 is completed), the second memory has not yet completed the execution of the IO WriteA2, that is, the Old A2 has not been updated to New A2. Thus, during the period from the completion of IO WriteA4 to the completion of the IO WriteA2, the other master modules and their corresponding master agent modules can read New A4 at the write address A4, but the data at the write address A2 is still the old data (Old A2). That is, the new data (New A2) written by the IO WriteA2, which should have been completed before the IO WriteA4, cannot be acquired, resulting in an ordering error and failing to satisfy the data consistency of the computer system.

It can be seen that there are limitations in the order-preserving processing of IO write requests for the IO module in the transmission network. The transmission network cannot independently ensure the in-order execution of consecutive IO write requests across a plurality of slave modules, and it is necessary to additionally introduce a single-issue processing mechanism with the slave as the granularity in the IO agent module. Meanwhile, performing order-preserving processing of IO write requests of the IO module in the transmission network will also reduce the flexibility of the transmission network and increase the difficulty in designing the transmission network, causing limited performance of the transmission network; specifically, in response to the transmission network performing order-preserving processing of IO write requests of the IO module, the transmission network can only use the mechanism of transmitting IO write requests of the IO module in order, causing the transmission network a lack of transmission flexibility and imposing restrictions on the design of the transmission network.

Based on this, the embodiments of the present disclosure consider avoiding the order-preserving processing on access requests of the IO module by the transmission network while ensuring data consistency of the computer system; that is, the solution provided by the embodiments of the present disclosure cancels the order-preserving requirement of the transmission network for access requests of the IO module, thereby releasing the transmission network of the computer system, so that the computer system can be adapted to transmission networks of any transmission mechanism, thereby reducing the design restrictions of the transmission network and improving the performance of the transmission network.

As an optional implementation, the embodiments of the present disclosure consider introducing a cache coherence protocol into the IO agent module, to ensure data consistency of the computer system and improve the performance of the transmission network. The IO agent module can manage IO write requests of the corresponding IO module by means of cache line based on the cache coherence protocol.

Specifically, the IO agent module can determine the cache line write operation corresponding to the IO write request initiated by the IO module, and acquire the exclusive permission of the cache line corresponding to the cache line write operation in the slave module, so that the access to the cache line by other master agent module will be fed back to the IO agent module through inquiry requests corresponding to the cache line before the IO agent module sends an IO write request. Thus, the IO agent module can respond to the inquiry requests based on the data consistency requirement, to ensure that the data access to the cache line by other master agent module is the latest and accurate before the IO agent module sends an IO write request, and ensure data consistency. Further, when the exclusive permission of the cache line corresponding to the cache line write operation of the IO write request has been acquired and the send order of the IO write requests arrives, the IO agent module can send a request for complete write cache line corresponding to the IO write request by means of complete write cache line, realizing writing the write data of the IO write request into the slave module, to process the IO write requests of the IO module and release the transmission network of the computer system while ensuring data consistency.

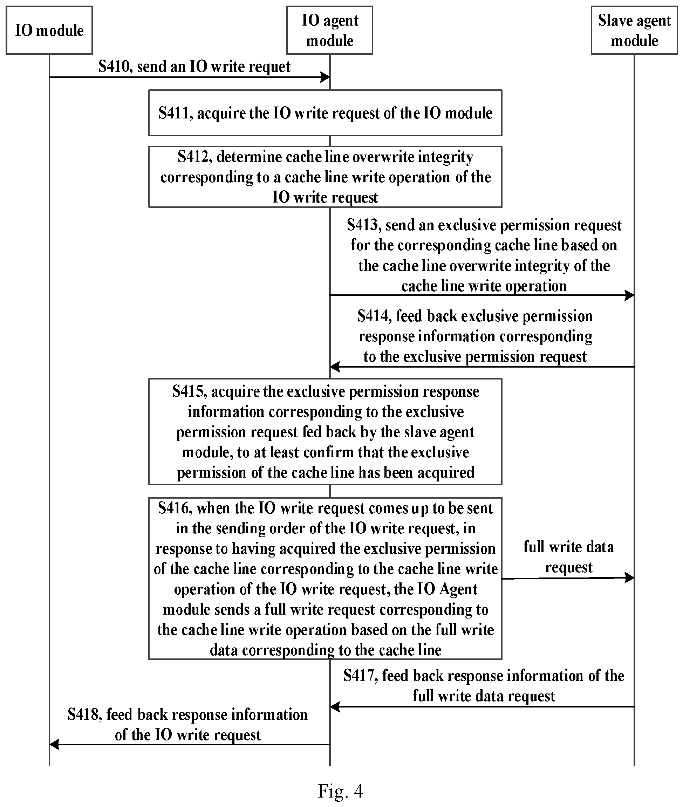

Based on the above ideas, as an optional implementation, Fig. 4 exemplarily illustrates an optional flowchart of a write request processing method provided by an embodiment of the present disclosure. The process in Fig. 4 exemplifies the solution for processing IO write requests of the IO module provided by the embodiment of the present disclosure mainly from the perspectives of the IO module, the IO agent module, and the slave agent module (such as a memory agent module). As shown in Fig. 4, the process may include the following steps.

In step S410, the IO module sends an IO write request to an IO agent module.

In an optional implementation, the IO module may continuously send a plurality of IO write requests to the IO agent module, such as a plurality of concurrent IO write requests, including but not limited to a plurality of concurrent IO write requests for the same slave module, a plurality of concurrent IO write requests for different slave modules (such as a plurality of IO write requests with consecutive addresses distributed to different slave modules), etc.

In step S411, the IO agent module acquires the IO write request of the IO module.

Correspondingly, the IO agent module can acquire the IO write request of the IO module based on the IO write request sent by the IO module to the IO agent module.

In an optional implementation, the IO agent module may set a request queue to store the request information of the acquired IO write requests. For example, the IO agent module may store the request information of the acquired IO write requests in order in the request queue, that is, the IO agent module stores the request information of the IO write requests in the request queue according to the acquiring order in which the IO write requests are acquired from the IO module. Thus, the storing order of the request information of the IO write requests in the request queue represents the acquiring order of the IO write requests, i.e., the order in which the IO agent module acquires the IO write requests from the IO module. Further, for the IO agent module, the send order of the IO write requests (i.e., the order in which the IO agent module sends the IO write requests to the transmission network) corresponds to the acquiring order of the IO write requests. Therefore, when the request information of the IO write requests is stored in order in the request queue of the IO agent module according to the acquiring order of the IO write requests, the storing order of the request information of the IO write requests in the request queue is the send order of the IO write requests.

In an optional implementation, the request queue of the IO agent module may be set in a buffer inside the IO agent module, so that the IO agent module can buffer the acquired request information of the IO write requests in order through the request queue in the buffer.

For example, the request information of an IO write request may include but is not limited to the write data of the IO write request (i.e., data content), the write address (i.e., the address where the write data is written into the slave module), the write data size (i.e., the data size of the write data), etc.

In step S412, the IO agent module determines cache line overwrite integrity corresponding to a cache line write operation of the IO write request.

In the embodiment of the present disclosure, the IO agent module has cache coherence protocol processing capability, and can manage IO write requests of the corresponding IO module by means of cache line based on the cache coherence protocol. That is, for IO write requests of the IO module, the IO agent module manages the IO write requests with the cache line as the granularity. Thus, when the IO agent module acquires an IO write request of the IO module (e.g., when the IO agent module stores the request information of the IO write request into the request queue), the IO agent module can determine the cache line write operation corresponding to the IO write request. For example, the IO agent module can parse the request information of the IO write request to determine the cache line write operation corresponding to the IO write request.

When the IO agent module manages the IO write request of the IO module by means of cache line, the write data operation of the IO write request may be mapped to the corresponding cache line, thereby obtaining the cache line write operation corresponding to the IO write request. That is, the write data of the IO write request is allocated to one or more cache lines, and data writing is performed with the cache line as the basic operation unit. Further, the cache line write operation of the IO write request has corresponding write data, that is, the write data of the cache line write operation is the data content written into the cache line corresponding to the cache line write operation by the IO write request.

It should be explained that the IO write request of the IO module refers to a request for writing data into an address range (such as a memory address range) of a slave module (such as a memory) by the IO module, and the address range may be indicated by the write address of the IO write request. The cache line write operation is a write operation that maps the IO write request to a specific cache line based on the write address and write data size of the IO write request, with the cache line as the basic unit. Therefore, the relationship between the IO write request and the cache line write operation is that: the IO write request triggers the cache line write operation, and the IO write request may be decomposed into one or more cache line write operations, so that the cache line write operation of the IO write request is used to write the write data of the cache line write operation into the cache line corresponding to the cache line write operation, to realize data writing of the IO write request.

It should be further explained that a cache line may be a fixed-size data block in the cacheable space of a slave module such as a memory. For example, the cache line size of a cache line may be a fixed size such as 64 bytes, which may specifically depend on the cache line size configuration and is not limited in the embodiments of the present disclosure. Data in the cacheable space of a slave module such as a memory may be loaded into a system cache of a computer system (such as the L1 cache, L2 cache, L3 cache of a core cluster, etc.).

Taking the slave module as the memory as an example, the cacheable space of the memory is a memory area in the memory that may be used for cache management, and data in the memory area is allowed to be loaded into processor caches such as the L1 cache, L2 cache and L3 cache, to speed up data access efficiency. Further, when the IO agent module manages the IO write request of the corresponding IO module by means of cache line, the IO agent module may write the write data of the cache line write operation into the cacheable space of the slave module such as the memory through the cache line write operation corresponding to the IO write request, achieving writing the write data of the IO write request into the slave module such as the memory.

When determining the cache line write operation corresponding to the IO write request, the IO agent module needs to determine the cache line overwrite integrity of the cache line write operation. The cache line overwrite integrity of the cache line write operation refers to the overwrite degree of the write data of the cache line write operation in the corresponding cache line. Based on whether the write data of the cache line write operation fully overwrites the corresponding cache line, the cache line overwrite integrity of the cache line write operation is classified into: complete overwrite (i.e., fully overwriting the cache line) and partial overwrite (i.e., partially overwriting the cache line).

The complete overwrite means that the write data size corresponding to the write data of the cache line write operation is equal to the cache line size, so that the write data of the cache line write operation fully overwrites all bytes of the corresponding cache line, for example, the write data size corresponding to the write data of the cache line write operation is equal to 64 bytes; in this case, the write data of the cache line write operation can be fully written into the corresponding cache line, without need to read and merge the existing data of the cache line, because the write data of the cache line write operation overwrites all bytes of the corresponding cache line, and the existing data of the cache line will be overwritten and updated by the write data of the cache line write operation.

Partial overwrite means that the write data of the cache line write operation is smaller than the cache line size, so that the write data of the cache line write operation cannot overwrite all bytes of the corresponding cache line, but only overwrites part of the bytes of the corresponding cache line, for example, the write data size corresponding to the write data of the cache line write operation is smaller than 64 bytes; in this case, the write data of the cache line write operation cannot be fully written into the corresponding cache line, and it is necessary to first read the existing data of the corresponding cache line, and merge the write data of the cache line write operation with the existing data corresponding to the bytes that is not overwritten in the cache line.

For ease of description, the embodiments of the present disclosure refer to a cache line write operation of which the cache line overwrite integrity is complete overwrite (i.e., fully overwriting the cache line) as a full cache line write operation, and refer to a cache line write operation of which the cache line overwrite integrity is partial overwrite (i.e., partially overwriting the cache line) as a partial cache line write operation. Thus, the cache line write operations in the embodiments of the present disclosure are classified into two types: the full cache line write operation and the partial cache line write operation.

For any IO write request acquired by the IO agent module, the IO write request may have one or more cache line write operations, and the type of the cache line write operations that the IO write request have may be the full cache line write operation, or the partial cache line write operation, or both of the full cache line write operation and the partial cache line write operation.

In an optional implementation, the cache line write operation of an IO write request may be determined based on the write address and write data size of the IO write request. That is, for any IO write request acquired by the IO agent module, the IO agent module may determine the cache line write operation of the IO write request based on the write address and write data size of the IO write request. Specifically, there may be various different situations for the cache line write operation of the IO write request based on whether the write address of the IO write request is aligned with the cache line boundary and the relationship between the write data size and the cache line size of the IO write request.

For example, when the write address of the IO write request is aligned with the cache line boundary, that is, when the write address (such as the start address) of the IO write request is the same as the start address of a cache line, the cache line write operation of the IO write request includes any one of the following:
in response to the write data size of the IO write request being equal to the cache line size, the IO write request has one full cache line write operation;
in response to the write data size of the IO write request being smaller than the cache line size, the IO write request has one partial cache line write operation;
in response to the write data size of the IO write request being greater than the cache line size and the write data size of the IO write request is an integer multiple of the cache line size, the IO write request has a plurality of full cache line write operations whose quantity corresponds to the integer multiple; and
in response to the write data size of the IO write request being greater than the cache line size and the write data size of the IO write request is not an integer multiple of the cache line size, the IO write request has one partial cache line write operation and at least one full cache line write operation.

For example, when the write address of the IO write request is not aligned with the cache line boundary, the IO write request may involve writing into one cache line or across a plurality of cache lines. Correspondingly, the type of the cache line write operation of the IO write request may be one partial cache line write operation, or two partial cache line write operations, or one partial cache line write operation and at least one full cache line write operation, or one partial cache line write operation and at least one full cache line write operation with one partial cache line write operation. The specific situations can be referred to the previous description in the same way, and will not be elaborated here.

In step S413, the IO agent module sends an exclusive permission request for a cache line corresponding to the cache line write operation to the slave agent module based on the cache line overwrite integrity of the cache line write operation, to acquire at least the exclusive permission of the cache line.

For any IO write request acquired by the IO agent module, after determining the cache line overwrite integrity of the cache line write operation of the IO write request, the embodiments of the present disclosure may send an exclusive permission request for the cache line corresponding to the cache line write operation to the slave agent module corresponding to the slave module directed at the IO write request (such as the memory agent module corresponding to the memory directed at the IO write request) based on the cache line overwrite integrity of the cache line write operation, to request at least to acquire the exclusive permission of the cache line corresponding to the cache line write operation. Specifically, one IO write request may have at least one cache line write operation, and each cache line write operation of the IO write request may send a corresponding exclusive permission request for the cache line based on the corresponding cache line overwrite integrity, to acquire at least the exclusive permission of the corresponding cache line; for example, the exclusive permission of the cache line corresponding to each cache line write operation of the IO write request may be acquired through the corresponding exclusive permission request.

As an optional implementation, the exclusive permission request may indicate a cache line for which exclusive permission is requested. For example, the exclusive permission request may carry address information of the cache line to identify the position of the cache line, for which exclusive permission needs to be requested, in the cacheable space of a slave module such as a memory.

In an optional implementation, for any cache line write operation of any IO write request (which may be one cache line write operation of one IO write request, or any cache line write operation among a plurality of cache line write operations of one IO write request), the IO agent module may send different exclusive permission requests based on whether the cache line write operation is a full cache line write operation or a partial cache line write operation, to adapt to the specific situation of the cache line write operation.

Specifically, in an optional implementation, in response to the cache line write operation being a full cache line write operation, that is, the cache line overwrite integrity of the cache line write operation is fully overwriting a cache line, the IO agent module may acquire the exclusive permission of the cache line corresponding to the cache line write operation without reading the existing data of the cache line, because the existing data of the cache line will be fully overwritten by the write data of the cache line write operation, and there is no need to read the existing data of the cache line. Based on this, in response to the cache line write operation being a full cache line write operation, the IO agent module may send a first exclusive permission request corresponding to the cache line to the slave agent module. The first exclusive permission request is used to request the exclusive permission of the cache line without reading the existing data of the cache line. For ease of description, the embodiments of the present disclosure refer to an exclusive permission request that requests the exclusive permission of a cache line but does not read the existing data of the cache line as the first exclusive permission request.

For example, the first exclusive permission request may be such as a Load To Exclusive No Data (LdToXND) request, where the LdToXND request is used to load a specific memory address for exclusive access (Exclusive) without transmitting actual data content (No Data), to occupy the specific memory address before executing an exclusive write operation to ensure that the subsequent write operation is exclusive.

In an optional implementation, in response to the cache line write operation being a partial cache line write operation, that is, the cache line overwrite integrity of the cache line write operation is partially overwriting a cache line, and the write data of the cache line write operation only overwrites part of the bytes of the cache line, at this time, the IO agent module needs to acquire the exclusive permission of the cache line corresponding to the cache line write operation and read the existing data of the cache line to avoid data conflict and inconsistency problems brought by directly performing the partial write operation on the cache line.

Specifically, the embodiments of the present disclosure do not support an inquiry response returning partial data, that is, they cannot synchronize only a part of the cache line. This is to avoid data conflict and inconsistency problems caused by different master modules modifying different parts of the same cache line simultaneously. For example, when a master agent module requests exclusive access to or modification of a certain cache line of a slave module, the slave agent module corresponding to the slave module will send an inquiry request to a master agent module that holds a copy or permission of the cache line; the inquiry response is a response to the inquiry request, and the master agent module that holds the copy or permission of the cache line will return the current state of the cache line or mark the cache line as invalid. In response to the inquiry response returning partial data of the cache line, it may cause different master modules in the computer system to modify different parts of the same cache line of the slave module in parallel, thereby leading to data inconsistency problems. Therefore, the embodiments of the present disclosure do not support an inquiry response returning Partial data.

Based on this, when the cache line write operation of an IO write request of the IO module is a partial cache line write operation, the IO agent module may send a second exclusive permission request corresponding to the cache line to the slave agent module. The second exclusive permission request is used to request the exclusive permission of the cache line and read the existing data of the cache line. Thus, the IO agent module can have the exclusive permission of the cache line corresponding to the partial cache line write operation and the existing data, can safely partially writing the write data of the partial cache line write operation into the corresponding cache line, and prevent other master agent module from modifying the cache line simultaneously, to ensure data consistency. For ease of explanation, the embodiments of the present disclosure refer to an exclusive permission request that requests the exclusive permission of a cache line and reads the existing data of the cache line as the second exclusive permission request.

For example, the second exclusive permission request may be such as an LdDataE (Load Data Exclusive) request. The LdDataE request is used to load data at a specific memory address and mark the memory address for exclusive access (Exclusive). Different from the LdToXND request, the LdDataE request loads and transmits the data content at the specific memory address and simultaneously requests exclusive access permission of the memory address.

In step S414, the slave agent module feeds back exclusive permission response information corresponding to the exclusive permission request to the IO agent module.

After the slave agent module acquires the exclusive permission request of the cache line sent by the IO agent module, the exclusive permission request acquired by the slave agent module is used to at least request the exclusive permission of the cache line, and the exclusive permission request corresponds to the cache line overwrite integrity of the cache line write operation corresponding to the cache line. Thus, the slave agent module can process the exclusive permission request, at least authorize the exclusive permission of the cache line to the IO agent module, and feed back exclusive permission response information corresponding to the exclusive permission request, such as TgtRsp information, to the IO agent module.

In an optional implementation, in response to the exclusive permission request acquired by the slave agent module being a first exclusive permission request (such as an LdToXND request), since the first exclusive permission request corresponds to the cache line write operation that is a full cache line write operation, the slave agent module can authorize the exclusive permission of the cache line indicated by the first exclusive permission request (such as an LdToXND request) to the IO agent module, and feed back exclusive permission response information (such as TgtRsp information) corresponding to the first exclusive permission request (such as an LdToXND request) to the IO agent module. At this time, the exclusive permission response information is only used to inform the IO agent module that the exclusive permission of the cache line has been successfully acquired, and does not carry the existing data of the cache line.

In an optional implementation, in response to the exclusive permission request acquired by the slave agent module being a second exclusive permission request (such as an LdDataE request), since the second exclusive permission request corresponds to the cache line write operation that is a partial cache line write operation, the slave agent module can authorize the exclusive permission of the cache line indicated by the second exclusive permission request (such as an LdDataE request) to the IO agent module, and feed back exclusive permission response information (such as TgtRsp information) corresponding to the second exclusive permission request (such as an LdDataE request) to the IO agent module. At this time, in addition to informing the IO agent module that the exclusive permission of the cache line has been successfully acquired, the exclusive permission response information also needs to carry the existing data of the cache line, so that the IO agent module can read the existing data of the cache line, to facilitate the IO agent module to merge the write data of the partial cache line write operation with the existing data of the corresponding cache line.

In a further optional implementation, when processing the exclusive permission request, the slave agent module can check the current state of the cache line based on the cache line for which exclusive permission is requested as indicated by the exclusive permission request (such as the address information of the cache line carried by the exclusive permission request); when the current state is that the exclusive permission of the cache line is occupied by other master agent module, the slave agent module can inform the other master agent module that occupies the cache line to release the permission; when the current state is that the exclusive permission of the cache line is not occupied by other master agent module, or the other master agent module that occupies the cache line has released the permission, the slave agent module can confirm that the IO agent module can successfully acquire the exclusive permission of the cache line, and thus the slave agent module can convert the state of the cache line to the exclusive state (Exclusive) and authorize the exclusive permission of the cache line to the IO agent module. Further, after authorizing the exclusive permission of the cache line to the IO agent module, the slave agent module can decide whether the exclusive permission response information (such as TgtRsp information) fed back to the IO agent module carries the existing data of the cache line based on whether the exclusive permission request is the first exclusive permission request (such as an LdToXND request) or the second exclusive permission request (such as an LdDataE request).

In step S415, the IO agent module acquires exclusive permission response information corresponding to the exclusive permission request fed back by the slave agent module, to at least confirm that the exclusive permission of the cache line has been acquired.

Correspondingly, based on the exclusive permission response information corresponding to the exclusive permission request sent by the slave agent module to the IO agent module, the IO agent module can at least confirm the cache line for which exclusive permission has been acquired. In an optional implementation, when the IO agent module acquires the fed-back exclusive permission response information, it can match the exclusive permission response information with the sent exclusive permission request to confirm the cache line for which exclusive permission has been acquired.

For example, when the IO agent module sends an exclusive permission request, the exclusive permission request may carry a request identifier to uniquely identify the exclusive permission request; thus, after the slave agent module authorizes the exclusive permission of the cache line to the IO agent module based on the address information of the cache line carried synchronously in the exclusive permission request, the request identifier of the exclusive permission request can be carried in the exclusive permission response information corresponding to the exclusive permission request, that is, the exclusive permission response information can bring back the request identifier of the corresponding exclusive permission request, to facilitate the corresponding matching between the exclusive permission request and the exclusive permission response information; further, the IO agent module can uniquely match the sent exclusive permission request through the request identifier carried in the exclusive permission response information (such as matching the sent exclusive permission request with the request identifier carried in the exclusive permission response information in the request table) to confirm the cache line for which exclusive permission has been acquired.

In a further optional implementation, in response to having acquired the exclusive permission of the cache line corresponding to the cache line write operation of the IO write request, the IO agent module may mark corresponding permission marking information for the IO write request, to indicate that the cache line exclusive permission of the cache line write operation of the IO write request has been acquired; for example, for any IO write request, in response to the IO agent module confirming that the exclusive permission response information corresponding to the exclusive permission request of the cache line write operation of the IO write request has all been returned, corresponding permission marking information can be marked for the IO write request.

For example, the IO agent module can mark the permission marking information of the IO write request in the request queue to represent the IO write request for which the cache line exclusive permission has been acquired in the request queue.

In a further optional implementation, the IO agent module can track the state and permission of the cache line through an entry. For example, the entry of the IO agent module may record information such as the address, state, and ongoing operation of the cache line. When the IO agent module acquires the exclusive permission response information, the state of the corresponding cache line in the entry can be set to exclusive.

In a further optional implementation, for a plurality of IO write requests (such as a plurality of concurrent IO write requests) acquired by the IO agent module, the IO agent module supports out-of-order acquiring of exclusive permissions corresponding to the plurality of IO write requests, that is, the cache line exclusive permissions corresponding to the cache line write operations of the plurality of IO write requests can be obtained out of order, and do not have to be acquired in the acquiring order in which the IO agent module acquires the plurality of IO write requests. For example, the IO agent module stores the request information of the IO write requests in order in the request queue according to the acquiring order of the IO write requests, so that the storing order of the IO write requests in the request queue is the send order of the IO write requests; when storing the IO write requests in the request queue, the IO agent module can correspondingly send exclusive permission requests of the cache lines based on the cache line overwrite integrity of the cache line write operations of the IO write requests, and confirm that the cache line exclusive permission of the cache line write operation of the IO write request has been acquired after acquiring the corresponding exclusive permission response information; in this case, for a plurality of IO write requests in the request queue that have no address conflict, the cache line exclusive permissions of the plurality of IO write requests can support out-of-order acquiring. For example, the exclusive permission response information of the plurality of IO write requests may be returned to the IO agent module out of order, and the IO agent module supports out-of-order acquiring of the exclusive permission response information corresponding to the plurality of IO write requests, so as to support out-of-order acquiring of the cache line exclusive permissions of the plurality of IO write requests.

It should be explained that since the IO agent module has acquired the exclusive permission of the cache line corresponding to the cache line write operation of the IO write request, before the exclusive permission of the IO agent module for the cache line is released, accesses to the cache line by other master agent modules will all be fed back to the IO agent module in the form of inquiry requests from the slave agent module for the cache line. Further, the IO agent module can respond to the inquiry requests based on the data consistency requirement to ensure that before the IO agent module performs the write operation on the cache line corresponding to the cache line write operation, the data access to the cache line by other master agent module is the latest and accurate, ensuring data consistency; that is, accesses to the cache line by other master agent module will all ask the IO agent module that has acquired the exclusive permission of the cache line in the form of inquiry requests, so that the IO agent module can inform the current correct complete data of the cache line through an inquiry response, thereby ensuring data consistency.

Further, in response to the exclusive permission response information fed back by the slave agent module being the exclusive permission response information corresponding to the first exclusive permission request (such as an LdToXND request), since the cache line write operation corresponding to the cache line for which exclusive permission is acquired is a full cache line write operation, the write data of the cache line write operation will fully overwrite the cache line. At this time, on the side of the IO agent module, the IO agent module does not need to perform further processing at the data processing level, but waits for the send order of the IO write request to arrive and the exclusive permission of the cache line to remain, then continues subsequent processing. That is, in a case where the cache line write operation is a full cache line write operation, the IO agent module does not need additional data merging, the write data of the cache line write operation is already the full write data of the corresponding cache line, and the IO agent module only needs to fully write the write data of the cache line write operation into the cache line when the send order of the IO write request arrives and the exclusive permission of the cache line remains.

Further, in response to the exclusive permission response information fed back by the slave agent module being the exclusive permission response information corresponding to the second exclusive permission request (such as an LdDataE request), the IO agent module can also read the existing data of the cache line based on the exclusive permission response information. At this time, the cache line write operation corresponding to the cache line for which exclusive permission is acquired is a partial cache line write operation, and the cache line write operation is a partial write to the cache line. Therefore, the IO agent module needs to merge the write data of the cache line write operation with the existing data of the cache line at the data processing level, to obtain the full write data of the cache line corresponding to the cache line write operation, that is, the full write data of the cache line at this time includes the write data of the cache line write operation and the part of the existing data that is not overwritten, to facilitate the IO agent module to fully write the full write data of the cache line into the cache line when the send order of the IO write request arrives and the exclusive permission of the cache line remains.

In an optional implementation, the IO agent module can merge the write data of the partial cache line write operation with the existing data of the corresponding cache line in an internal buffer.

Further, in the case where the cache line write operation is a partial cache line write operation, after the IO agent module reads the existing data of the corresponding cache line, the IO agent module can write the write data of the cache line write operation into part of the bytes of the cache line according to the byte enabling information (ByteEnable) of the cache line write operation, to overwrite the part of the existing data corresponding to the part of the bytes, and form merged data of the cache line as the full write data corresponding to the cache line. The ByteEnable of the cache line write operation can indicate the part of the bytes written into the corresponding cache line, that is, the ByteEnable information can locate the range of the written bytes in the cache line; thus, when merging the write data of the cache line write operation with the existing data of the corresponding cache line, the write data of the cache line write operation is written into the part of the bytes indicated by the ByteEnable information in the corresponding cache line, that is, the ByteEnable information can ensure that when the write data of the partial cache line write operation is merged with the existing data of the corresponding cache line, the write data of the partial cache line write operation can correctly overwrite the corresponding part of the bytes in the corresponding cache line, ensuring the accuracy of data merging without data loss.

In a further optional implementation, in the case where the cache line write operation is a partial cache line write operation, the IO agent module cannot discard the ByteEnable information of the cache line write operation, but needs to continue saving the ByteEnable information of the cache line write operation, so that the IO agent module may perform re-data merging subsequently; for example, the IO agent module may save the ByteEnable information of the partial cache line write operation of the IO write request in the request information of the IO write request in the request queue, or save the ByteEnable information of the partial cache line write operation in a buffer.

**In** step S416, when the send order of the IO write request arrives, in response to having acquired the exclusive permission of the cache line corresponding to the cache line write operation of the IO write request, the IO agent module sends a full write data request corresponding to the cache line write operation based on the full write data corresponding to the cache line.

The IO write requests acquired by the IO agent module are sent in order, for example, the IO write requests are sent in order according to the storing order of the IO write requests in the request queue; for any IO write request, when it is the turn for the IO write request to be sent, the IO agent module can check whether the exclusive permission of the cache line corresponding to the cache line write operation of the IO write request has been acquired (such as checking whether the permission marking information of the IO write request is marked in the request queue). In response to checking that the exclusive permission of the cache line corresponding to the cache line write operation of the IO write request has been acquired (such as detecting that the IO write request is marked with permission marking information), then the IO agent module can send the IO write request by means of complete writing of the cache line, that is, the IO write request writes full write data into the cache line corresponding to the cache line write operation of the IO write request by means of the cache line write operation, and the full write data includes the write data of the cache line write operation of the IO write request, to realize the writing of the write data of the IO write request into the slave module. Thus, for any IO write request, when the send order of the IO write request arrives and the exclusive permission of the cache line corresponding to the cache line write operation has been acquired, the IO agent module can send a full write data request corresponding to the cache line write operation of the IO write request based on the full write data (in the cache line ) corresponding to the cache line write operation of the IO write request, to write the full write data into the cache line corresponding to the cache line write operation of the IO write request through the full write data request, and the full write data includes at least the write data of the cache line write operation of the IO write request. Further, when the send order of the IO write request arrives, in response to the IO write request being not marked with permission marking information, it is necessary to wait until the IO write request acquires the exclusive permission, and then sends the full write data request corresponding to the cache line write operation based on the full write data corresponding to the cache line.

It can be understood from the previous description that in response to the cache line write operation of the IO write request being a full cache line write operation, the full write data corresponding to the cache line of the cache line write operation is the write data of the cache line write operation, so that the sent full write data request corresponding to the cache line write operation is used to write the write data of the cache line write operation into the cache line corresponding to the cache line write operation. In response to the cache line write operation of the IO write request being a partial cache line write operation, the full write data corresponding to the cache line of the cache line write operation is merged data, which is the merged data obtained after merging the write data of the cache line write operation with the existing data of the corresponding cache line, so that the sent full write data request corresponding to the cache line write operation is used to write the merged data of the corresponding cache line into the cache line corresponding to the cache line write operation, and the merged data includes the write data of the cache line write operation.

In an optional implementation, the full write data request may be such as an Evict Data Full (complete eviction data) request, which is used to fully write data into the cache line.

In step S417, the slave agent module feeds back response information of the full write data request to the IO agent module.

After the slave agent module acquires the full write data request (such as an Evict Data Full request) sent by the IO agent module, the slave agent module can process the full write data request, thereby writing the corresponding full write data into the cache line indicated by the full write data request, and feeding back corresponding response information to the IO agent module. The full write data request may carry address information of the cache line that is requested to be written into, and the full write data requested to be written; further, the full write data request may further carry a request identifier to identify the full write data request.

In step S418, the IO agent module feeds back response information of the IO write request to the IO module.

After the IO agent module acquires the response information of the full write data request fed back by the slave agent module, in response to confirming that the full write data request corresponding to the cache line write operation of the IO write request has been executed (such as matching the full write data request that has been executed based on the request identifier carried in the response information), the IO agent module can feed back the response information (such as Rsp information) corresponding to the IO write request to the IO module, to facilitate to inform the IO module that the IO write request has been executed.

Further, when the execution of the full write data request corresponding to the cache line write operation of the IO write request is completed, the IO agent module may request releasing the exclusive permission of the cache line corresponding to the cache line write operation, such as sending a request to the slave agent module for releasing the exclusive permission of the corresponding cache line; or, when the slave agent module completed the execution of the full write data request corresponding to the cache line write operation, the slave agent module may also actively release the exclusive permission of the corresponding cache line and inform the IO agent module.

The above-mentioned interaction between the IO agent module and the slave agent module may be carried out through a transmission network. The embodiments of the present disclosure do not limit the transmission network, and the computer system can be adapted to any transmission network, such as a transmission network configured with any transmission mechanism.

In the write request processing method provided by the embodiments of the present disclosure, the IO agent module is configured to, based on the cache coherence protocol, manage the IO write request of the corresponding IO write request by means of cache line. When the IO agent module acquires the IO write request of the IO module, the IO agent module can determine the cache line overwrite integrity corresponding to the cache line write operation of the IO write request, and send the exclusive permission request of the cache line corresponding to the cache line write operation based on the cache overwrite integrity of the cache line write operation, to acquire at least the exclusive permission of the cache line, thus ensuring that before the IO agent module executes the write operation on the cache line corresponding to the cache line write operation, the access to the cache line by other master agent module will be fed back to the IO agent module through an inquiry request corresponding to the cache line, so that the IO agent module can respond to the inquiry request based on a data consistency requirement, to ensure that the data access by other master agent module is the latest and accurate, ensuring the data consistency. Further, when the send order of the IO write request arrives, in response to the IO agent module confirming that the exclusive permission of the cache line corresponding to the cache line write operation of the IO write request has been acquired, the IO agent module can send the full write data request corresponding to the cache line write operation based on the full write data corresponding to the cache line, to request writing the full write data into the cache line, and the full write data includes at least write data of the cache line write operation, to realize the sending of the IO write request.

In the above process, the IO agent module based on the cache coherence protocol, can transfer the order control point (i.e., the order-preserving point) of the IO write request for writing data to the IO agent module by acquiring the exclusive permission of the cache line corresponding to the cache line write operation of the IO write request. Therefore, the embodiments of the present disclosure can release an order-preserving requirement of the transmission network of the computer system for the access requests of the IO module, so that the computer system can adapt to a transmission network having any transmission mechanism, the design restriction of the transmission network is reduced, thereby improving the performance of the transmission network, such as improving utilization rate of the transmission network and throughput of the computer system. Therefore, the embodiments of the present disclosure can release the order-preserving requirement of the transmission network of the computer system for the IO write request to improve the performance of the transmission network while ensuring the data consistency of the computer system.

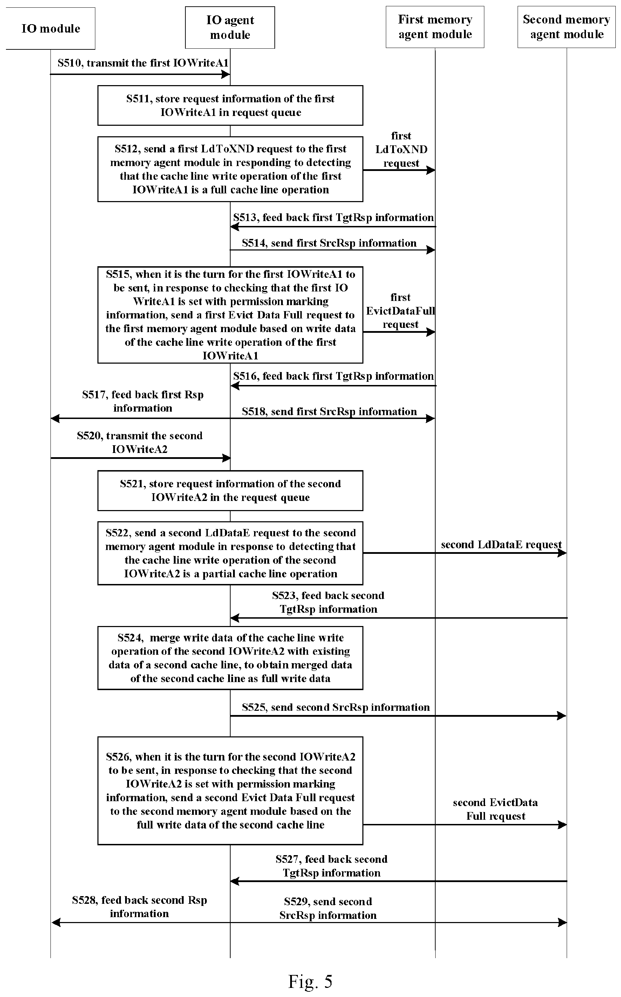

For ease of further understanding, taking the IO module performing write operations on a plurality of memories as an example, Fig. 5 exemplarily illustrates an example diagram of a write request processing method provided by an embodiment of the present disclosure. The example in Fig. 5 mainly exemplifies from the perspective of interaction between the IO module, the IO agent module, and memory agent modules corresponding to a plurality of memories. The plurality of memories relate to a first memory and a second memory; the memory agent module corresponding to the first memory is the first memory agent module, and the memory agent module corresponding to the second memory is the second memory agent module. In the example of Fig. 5, the IO WriteA1 of the IO module is for the first memory, and for ease of description, the IO WriteA1 is referred to as a first IO write request, i.e., the first IO WriteA1, and it is taken as an example that the first IO WriteA1 has one full cache line write operation; the IO WriteA2 of the IO module is for the second memory, and for ease of description, the IO WriteA2 is referred to as a second IO write request, i.e., the second IO WriteA2, and it is taken as an example that the second IO WriteA2 has one partial cache line write operation. As shown in Fig. 5, the example process of the write request processing method includes the following steps.

In step S510, the IO module transmits the first IO WriteA1 to the IO agent module.

In step S511, the IO agent module stores request information of the first IO WriteA1 in the request queue.

In step S512, in response to the IO agent module detecting that the cache line write operation of the first IO WriteA1 is a full cache line write operation, the IO agent module sends a first LdToXND request to the first memory agent module, to request acquiring the exclusive permission request for the first cache line corresponding to the cache line write operation.

Fig. 5 is explained by taking the cache line write operation of the first IO WriteA1 as a full cache line write operation as example. For example, the first IO WriteA1 writes a complete 64-byte cache line, and then the cache line corresponding to the cache line write operation of the first IO WriteA1 is referred to as a first cache line; thus, when the IO agent module detects that the first IO WriteA1 writes a complete cache line, an LdToXND request (referred to as a first LdToXND request) corresponding to the cache line write operation of the first IO WriteA1 is triggered, to request the exclusive permission of the first cache line corresponding to the cache line write operation of the first IO WriteA1, without reading the existing data of the first cache line.

In step S513, the first memory agent module feeds back the first TgtRsp information to the IO agent module.

After acquiring the first LdToXND request, the first memory agent module can process the first LdToXND request and return corresponding TgtRsp information (referred to as the first TgtRsp information) to the IO agent module, to inform the IO agent module that the IO agent module has successfully acquired the exclusive permission of the first cache line.

In an optional implementation, after acquiring the first LdToXND request, the first memory agent module can check the current state of the first cache line based on the address (e.g., start address) of the first cache line carried by the first LdToXND request; when the current state is that the permission of the first cache line is not occupied by other master agent modules, or the other master agent modules that occupy the first cache line release the permission, the first memory agent module can confirm that the IO agent module can successfully acquire the exclusive permission of the first cache line, so that the first memory agent module can convert the state of the first cache line to the exclusive state and authorize the permission of the first cache line to the IO agent module. Further, the first memory agent module returns the first TgtRsp information to the IO agent module, and the first TgtRsp information does not carry the existing data of the first cache line, but only informs the IO agent module that the IO agent module has successfully obtained the exclusive permission of the first cache line.

In step S514, the IO agent module sends first SrcRsp information to the first memory agent module.

In an optional implementation, after acquiring the first TgtRsp information fed back by the first memory agent module, it can confirm that the IO agent module has acquired the exclusive permission of the first cache line by matching the first TgtRsp information with the first LdToXND request, so that the entry maintained by the IO agent module can record the state of the first cache line as the exclusive state, and set permission marking information for the corresponding first IO WriteA1 in the request queue.

Further, the IO agent module can send corresponding SrcRsp information (referred to as first SrcRsp information) to the first memory agent module to inform the first memory agent module that the IO agent module will prepare to perform write operations related to the first cache line subsequently.

In step S515, the IO agent module sends IO write requests based on the order of IO write requests in the request queue. When it is the turn of for the first IO WriteA1 to be sent, in response to checking that the first IO WriteA1 is set with permission marking information, the IO agent module sends a first Evict Data Full request to the first memory agent module based on write data of the cache line write operation of the first IO WriteA1, to request writing the write data of the cache line write operation into the first cache line.

The IO agent module can send IO write requests in order based on the order of IO write requests stored in the request queue. When it is the turn for the first IO WriteA1 to be sent, the IO agent module can confirm that the IO agent module has acquired the exclusive permission of the first cache line written by the first IO WriteA1 based on the permission marking information of the first IO WriteA1 set in the request queue, so that the IO agent module can send a corresponding Evict Data Full request (referred to as a first Evict Data Full request) to the first memory agent module based on the write data of the cache line write operation of the first IO WriteA1 (which is the write data of the first IO WriteA1 at this time, corresponding to the full write data of the first cache line), to request writing the write data of the cache line write operation of the first IO WriteA1 into the first cache line.

In step S516, the first memory agent module feeds back first TgtRsp information to the IO agent module.

After the first memory agent module acquires the first Evict Data Full request, since the exclusive permission of the first cache line is acquired by the IO agent module that sent the first Evict Data Full request, the first memory agent module allows the execution of the first Evict Data Full request, thereby scheduling the first memory to execute the first Evict Data Full request to write corresponding write data into the first cache line indicated by the first Evict Data Full request. Further, the first memory agent module feeds back corresponding TgtRsp information (referred to as first TgtRsp information) to the IO agent module to represent that the execution of the first Evict Data Full request is completed.

In step S517, the IO agent module feeds back first Rsp information to the IO module.

In step S518, the IO agent module sends first SrcRsp information to the first memory agent module.

After receiving the first TgtRsp information, the IO agent module confirms that the execution of the first Evict Data Full request is completed, and can feed back corresponding Rsp information (referred to as first Rsp information) to the IO module to represent that the first IO WriteA1 has completed writing data; further, the IO agent module feeds back corresponding first SrcRsp information to the first memory agent module, representing that the relevant process of the first IO WriteA1 has been completed.

Fig. 5 further exemplifies the processing process for the second IO WriteA2, as follows.

In step S520, the IO module transmits the second IO WriteA2 to the IO agent module.

In step S521, the IO agent module stores the request information of the second IO WriteA2 in the request queue.

In step S522, in response to the IO agent module detecting that the cache line write operation of the second IO WriteA2 is a partial cache line write operation, the IO agent module sends a second LdDataE request to the second memory agent module to request acquiring the exclusive permission request of the second cache line corresponding to the cache line write operation and read existing data of the second cache line.

Fig. 5 is explained by taking the cache line write operation of the second IO WriteA2 being a partial cache line write operation as example for explanation. For example, the second IO WriteA2 writes part of the bytes in a 64-byte cache line, and the cache line corresponding to the cache line write operation of the second IO WriteA2 is referred to as a second cache line; thus, when the IO agent module detects that the second IO WriteA2 writes a part of the cache line, an LdDataE request corresponding to the cache line write operation of the second IO WriteA2 (the LdDataE request directed at the second IO WriteA2 is referred to as a second LdDataE request) can be triggered to request the exclusive permission of the second cache line corresponding to the cache line write operation of the second IO WriteA2 and read the existing data of the second cache line.

In step S523, the second memory agent module feeds back second TgtRsp information to the IO agent module.

After acquiring the second LdDataE request, the second memory agent module can process the second LdDataE request, authorize the exclusive permission of the second cache line requested by the second LdDataE request to the IO agent module, and feed back the data of the second cache line to the IO agent module through corresponding TgtRsp information (referred to as the second TgtRsp information), to inform the IO agent module through the second TgtRsp information that the IO agent module has successfully acquired the requested exclusive permission of the second cache line and enable the IO agent module to acquire the existing data of the second cache line through the second TgtRsp information.

In step S524, the IO agent module merges write data of the cache line write operation of the second IO WriteA2 with existing data of the second cache line to obtain merged data of the second cache line as full write data.

After acquiring the second TgtRsp information, the IO agent module can parse out the existing data of the second cache line fed back by the second memory agent module, and merge write data of the cache line write operation of the second IO WriteA2 (which is the write data of the second IO WriteA2 at this time) with the existing data of the second cache line, to obtain merged data of the second cache line as full write data of the second cache line. For example, the IO agent module can merge, in an internal buffer, the write data of the cache line write operation with the existing data of the second cache line based on the ByteEnable information of the cache line write operation of the second IO WriteA2, and the write data of the cache line write operation overwrites part of the bytes (in the second cache line) indicated by the ByteEnable information.

Further, the IO agent module can set the state of the second cache line in the entry as the exclusive state and set permission marking information for the second IO WriteA2 in the request queue.

In step S525, the IO agent module sends the second SrcRsp information to the second memory agent module.

In step S526, the IO agent module sends IO write requests based on the order of IO write requests in the request queue. When it is the turn for the second IO WriteA2 to be sent, in response to checking that the second IO WriteA2 is set with permission marking information, the IO agent module sends a second Evict Data Full request to the second memory agent module based on the full write data of the second cache line, to request for writing the full write data of the second cache line into the second cache line.

That is, on the basis of data merging of the second cache line, the second IO WriteA2 is sent by means of an Evict Data Full request (referred to as a second Evict Data Full request) corresponding to the merged data of the second cache line (i.e., the full write data of the second cache line), to write the merged data containing the write data of the second IO WriteA2 into the second cache line, to realize the execution of the second IO WriteA2.

In step S527, the second memory agent module feeds back second TgtRsp information to the IO agent module.

After acquiring the second Evict Data Full request, since the exclusive permission of the second cache line is acquired by the IO agent module that sent the second Evict Data Full request, the second memory agent module allows the execution of the second Evict Data Full request, thereby scheduling the second memory to execute the second Evict Data Full request. Further, the second memory agent module feeds back corresponding TgtRsp information (referred to as second TgtRsp information) to the IO agent module to represent that the execution of the second Evict Data Full request is completed.

In step S528, the IO agent module feeds back second Rsp information to the IO module.

In step S529, the IO agent module sends second SrcRsp information to the second memory agent module.

After receiving the second TgtRsp information, the IO agent module feeds back corresponding Rsp information (referred to as the second Rsp information) to the IO module, and the IO agent module feeds back corresponding second SrcRsp information to the second memory agent module, representing that the process related to the second IO WriteA2 has been completed.

The above-mentioned interaction between the IO agent module, the first memory agent module and the second memory agent module may be performed through a transmission network. The embodiments of the present disclosure do not limit the transmission network, and the computer system can be adapted to any transmission network, such as a transmission network configured with any transmission mechanism.

In a further optional implementation, after acquiring the exclusive permission of the cache line corresponding to the cache line write operation of the IO write request and before sending a full write data request (e.g., Evict Data Full request) corresponding to the cache line write operation, the IO agent module may further receive an inquiry request of the slave agent module about the cache line. The inquiry request is triggered by an access to the cache line by other master agent module, i.e., an inquiry conflict situation occurs before Evict Data Full. Specifically, after the IO agent module acquires the exclusive permission of the cache line and before the IO agent module sends the corresponding Evict Data Full request, the slave agent module will check the state of the cache line to the IO agent module through an inquiry operation based on the access request of the other master agent module for the cache line, and the IO agent module will receive an inquiry request of the slave agent module at this time; to simplify protocol processing, the embodiment of the present disclosure supports the IO agent module to set the state of the cache line to Invalid through an inquiry response, to release the exclusive permission of the cache line, and simultaneously reset the process of the IO agent module acquiring the exclusive permission of the cache line, to avoid cache line permission conflict between different modules, and ensure that the write operation can be executed in the correct order and maintain data consistency.

That is, for the example process in Fig. 4, after acquiring the exclusive permission of the cache line and before sending the full write data request corresponding to the cache line write operation, in response to having acquired an inquiry request for the cache line, the IO agent module sends a corresponding inquiry response to release the exclusive permission of the cache line; and, the IO agent module needs to return to the step S413, i.e., return to the step of sending an exclusive permission request for the cache line corresponding to the cache line write operation based on the cache line overwrite integrity of the cache line write operation, to acquire at least the exclusive permission of the cache line.

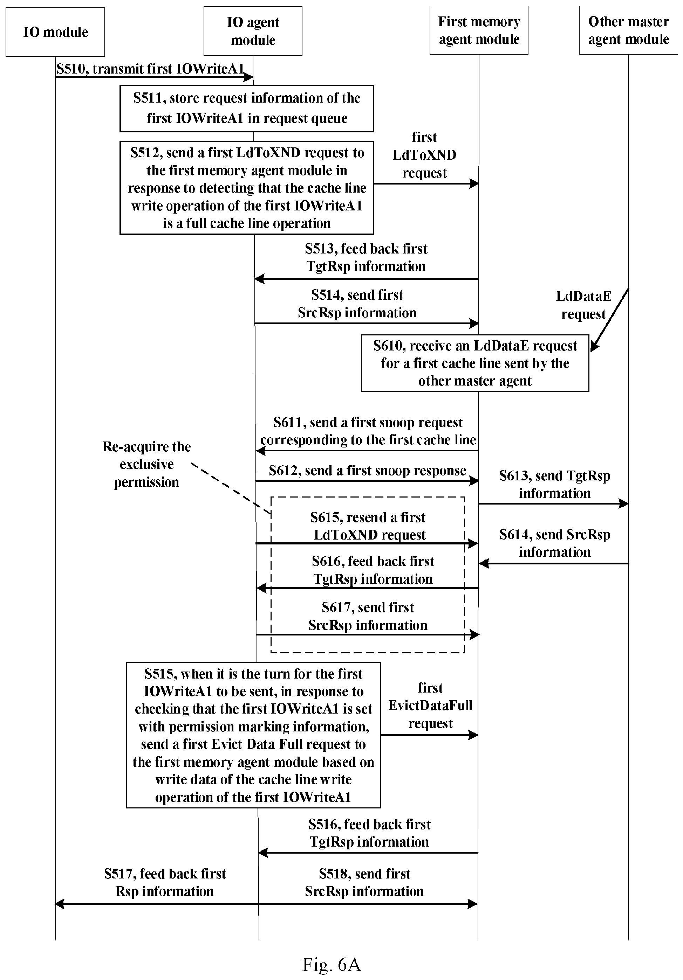

For ease of understanding, taking the IO agent module exemplified in Fig. 5 that has acquired the exclusive permission of the first cache line corresponding to the first IO WriteA1 and has acquired an inquiry request of the first cache line before sending the first Evict Data Full request as an example, Fig. 6A exemplarily illustrates another example diagram of a write request processing method provided by an embodiment of the present disclosure. To simplify the explanation, the content in Fig. 6A related to Fig. 5 can be referred to accordingly. Specifically, after the IO agent module has acquired the exclusive permission of the first cache line and before the IO agent module sends the first Evict Data Full request, the process exemplified in Fig. 6A includes the following steps.

In step S610, the first memory agent module receives an LdDataE request for the first cache line sent by the other master agent module.

The other master agent module is, for example, the other IO agent module or the other core cluster agent module. The other master agent module can send an LdDataE request for the first cache line to the first memory agent module, to request the exclusive permission and existing data of the first cache line. The time when the first memory agent module receives the LdDataE request of the other master agent module for the first cache line is later than the time when the first memory agent module authorizes the exclusive permission of the first cache line to the IO agent module, and is earlier than the time when the first memory agent module receives the first Evict Data Full request.

In step S611, the first memory agent module sends a first inquiry request corresponding to the first cache line to the IO agent module.

Since the IO agent module has obtained the exclusive permission of the first cache line through the first LdToXND request, when the first memory agent module receives the LdDataE request of the other master agent module for the first cache line, the first memory agent module cannot directly provide the exclusive permission of the first cache line to the other master agent module and return the existing data. Based on this, the first memory agent module may initiate an inquiry request corresponding to the first cache line (referred to as a first inquiry request) to the IO agent module to inquiry the state of the first cache line and require the IO agent module to release the exclusive permission of the first cache line.

In step S612, the IO agent module sends a first inquiry response to the first memory agent module.

When the IO agent module acquires the first inquiry request, the IO agent module has not yet sent the first Evict Data Full request. For example, it is not yet the turn for the first IO WriteA1 to be sent, so the IO agent module has not sent the first Evict Data Full request; at this time, the IO agent module can respond to the first inquiry request corresponding to the first cache line, set the state of the first cache line to an invalid state, representing that the IO agent module abandons the exclusive permission of the first cache line; thus, the IO agent module can send an inquiry response corresponding to the first inquiry request (referred to as a first inquiry response) to the first memory agent module. The inquiry response is, for example, inquiry RspToTgt (inquiry Response To Target) information, and the first inquiry response indicates that the state of the first cache line is in the invalid state.

That is, after acquiring the exclusive permission of the cache line and before sending the full write data request corresponding to the cache line write operation, in response to an inquiry request for the cache line being acquired, the IO agent module will send a corresponding inquiry response to inform that the state of the cache line is in the invalid state, and the IO agent module releases the exclusive permission of the cache line.

Further, since the IO agent module acquires the inquiry request for the cache line before performing Evict Data Full on the cache line, when performing the inquiry response, the IO agent module may not return the full write data of the cache line to the slave agent module. For example, the inquiry response does not carry data of the cache line, and at this time, the inquiry response is only a response indicating that the state of the cache line is in the invalid state, not a data response.

It can be seen that due to the LdDataE request of the other master agent module for the cache line and the inquiry request of the slave agent module for the cache line, the IO agent module can abandon the exclusive permission of the cache line to ensure that IO write request of the other master agent module for the cache line can be executed in the correct order before the IO agent module sends the Evict Data Full request, maintaining data consistency of the computer system.

In step S613, the first memory agent module sends TgtRsp information to the other master agent module.

After acquiring the first inquiry response sent by the IO agent module, the first memory agent module can confirm that the IO agent module has released the exclusive permission of the first cache line, so the first memory agent module can process the access request of the other master agent module, for example, authorize the exclusive permission of the first cache line to the other master agent module and send corresponding TgtRsp information to the other master agent module; since the request initiated by the other master agent module to the first memory agent module is an LdDataE request, the TgtRsp information sent by the first memory agent module to the other master agent module further carries the existing data of the first cache line.

In step S614, the other master agent module sends SrcRsp information to the first memory agent module.

After acquiring the TgtRsp information of the first memory agent module, the other master agent module represents that it has acquired the exclusive permission and existing data of the first cache line, so the other master agent module can send corresponding SrcRsp information to the first memory agent module.

In step S615, the IO agent module resends a first LdToXND request to the first memory agent module.

Since the exclusive permission of the IO agent module for the first cache line is interrupted, the IO agent module needs to re-initiate the first LdToXND request, that is, resend the first LdToXND request to the first memory agent module to request for acquiring the exclusive permission of the first cache line without reading the existing data of the first cache line.

Specifically, after the IO agent module acquires the first inquiry request, the state of the first cache line in the entry of the IO agent module is set from exclusive to invalid, that is, the exclusive permission of the first cache line in the entry is inquired as invalid. Since the first Evict Data Full request of the IO agent module has not been sent, the IO agent module needs to perform a write operation on the first cache line subsequently to ensure that the first Evict Data Full request can be executed correctly. Thus, after the first cache line is set to an invalid state (for example, the state of the first cache line in the entry is set to invalid), the IO agent module can trigger an operation to re-acquire the exclusive permission of the first cache line, and further the IO agent module can resend the first LdToXND request to the first memory agent module, that is, the operation of the IO agent module acquiring the exclusive permission of the first cache line is reset due to the inquiry request.

That is, after acquiring the exclusive permission of the cache line and before sending the full write data request corresponding to the cache line write operation, in response to an inquiry request for the cache line being acquired, the IO agent module will release the exclusive permission of the cache line due to the access to the cache line by the other master agent module, and the IO agent module will re-acquire an exclusive permission of the cache line.

In step S616, the first memory agent module feeds back first TgtRsp information to the IO agent module.

After receiving the first LdToXND request, the first memory agent module can re-authorize an exclusive permission of the first cache line to the IO agent module and re-feed back the first TgtRsp information.

For a new exclusive permission request of the IO agent module for the cache line, the slave agent module can re-authorize the exclusive permission of the cache line to the IO agent module in any of the following cases:

the other master agent module has completed operations on the cache line; the purpose of the inquiry request is to make the IO agent module release the control of the cache line, to facilitate the other master agent module to be able to access or modify data of the cache line; in the case where the slave agent module receives a response that the other master agent module has completed operations on the cache line, the other master agent module will release the permission of the cache line at this time, so the slave agent module can re-authorize the exclusive permission of the cache line to the IO agent module; and

the cache line is in an unowned state, and after the other master agent module completes operations on the cache line, the cache line is not further held with exclusive permission, so the slave agent module can re-authorize the exclusive permission of the cache line to the IO agent module.

In step S617, the IO agent module sends first SrcRsp information to the first memory agent module.

The subsequent flow exemplified in Fig. 6A continues to the stage where the IO agent module sends the first Evict Data Full request in Fig. 5, which will not be elaborated here, and the relevant content may refer to the relevant description in the example part of Fig. 5.

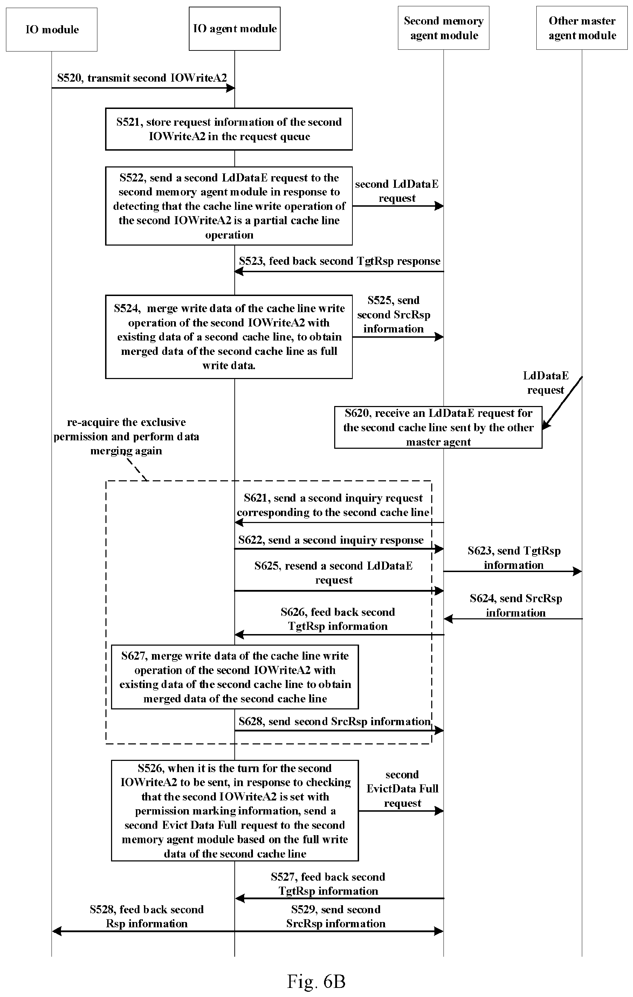

It should be explained that Fig. 6A takes the cache line write operation of the first IO WriteA1 as a full cache line write operation for example. In the case where the cache line write operation of the IO write request is a partial cache line write operation, taking inquiry conflict before Evict Data Full of the second IO WriteA2 as an example, Fig. 6B exemplarily illustrates another example diagram of a write request processing method provided by an embodiment of the present disclosure. The difference between Fig. 6A and Fig. 6B is that in the case of a partial cache line write operation, the IO agent module needs to reset the step of acquiring the exclusive permission of the cache line and reset the process of merging write data. As shown in Fig. 5 and Fig. 6B, the process exemplified in Fig. 6B includes the following steps.

In step S620, the second memory agent module receives an LdDataE request for the second cache line sent by the other master agent module.

In step S621, the second memory agent module sends a second inquiry request corresponding to the second cache line to the IO agent module.

Since the IO agent module has acquired the exclusive permission of the second cache line through a second LdDataE request, when the second memory agent module receives the LdDataE request of the other master agent module for the second cache line, the second memory agent module needs to inquiry the state of the second cache line to the IO agent module and require the IO agent module to release the exclusive permission.

In step S622, the IO agent module sends a second inquiry response to the second memory agent module.

When the IO agent module acquires the second inquiry request, the IO agent module has not yet sent the second Evict Data Full request. For example, it is not yet the turn for the second IO WriteA2 to be sent in the request queue, so the IO agent module has not yet sent the second Evict Data Full request; at this time, the IO agent module can respond to the second inquiry request, set the state of the second cache line to an invalid state, representing that the IO agent module abandons the exclusive permission of the second cache line; for example, the IO agent module sets the state of the second cache line in the entry from exclusive to invalid. Thus, the IO agent module can send a second inquiry response to the second memory agent module, where the second inquiry response indicates that the state of the second cache line is in the invalid state, and the second inquiry response does not serve as a data response.

In step S623, the second memory agent module sends TgtRsp information to the other master agent module.

After acquiring the second inquiry response sent by the IO agent module, the second memory agent module can confirm that the IO agent module has released the exclusive permission of the second cache line, so the second memory agent module can authorize the exclusive permission of the second cache line to the other master agent module and send corresponding TgtRsp information to the other master agent module; since the request initiated by the other master agent module to the second memory agent module is an LdDataE request, the TgtRsp information further carries existing data of the second cache line.

In step S624, the other master agent module sends SrcRsp information to the second memory agent module.

In step S625, the IO agent module resends a second LdDataE request to the second memory agent module.

The IO agent module may trigger an operation to re-acquire the exclusive permission of the second cache line, and further the IO agent module can resend a second LdDataE request to the second memory agent module. Since the cache line write operation of the second IO WriteA2 is a partial cache line write operation, the corresponding exclusive permission request is an LdDataE request. That is, the operation of the IO agent module acquiring the exclusive permission and the existing data of the second cache line is reset due to the inquiry request for the second cache line.

In step S626, the second memory agent module feeds back second TgtRsp information to the IO agent module.

In step S627, the IO agent module merges write data of the cache line write operation of the second IO WriteA2 with existing data of the second cache line to acquire merged data of the second cache line.

In step S628, the IO agent module sends second SrcRsp information to the second memory agent module.

The subsequent flow exemplified in Fig. 6B continues to the stage where the IO agent module sends the second Evict Data Full request in Fig. 5, which will not be elaborated here, and relevant content can refer to the relevant description in part of the example in Fig. 5. It can be seen that when the cache line write operation of the cache line corresponding to the inquiry request is a partial cache line write operation, the IO agent module, in addition to re-acquiring the exclusive permission of the cache line, further needs to re-merge the write data of the cache line write operation with the existing data of the cache line. For example, it is necessary to use the saved ByteEnable information for re-data merging at this time.

In a further optional implementation, when an inquiry conflict occurs before Evict Data Full, the IO agent module needs to check the state of the IO write request according to address matching and mark the IO write request as an interrupted state; specifically, the request buffer of the IO agent module temporarily stores uncompleted IO write requests, and each IO write request includes a corresponding write address. When the exclusive permission of the cache line corresponding to the IO write request is interrupted by a inquiry and the exclusive permission is lost, causing the progress of the IO write request to be forced to interrupt, the IO agent module needs to temporarily save the state of the IO write request and mark the state of the IO write request as an interrupted state; further, after re-acquiring the exclusive permission of the cache line, the IO agent module will match the cache line of which the exclusive permission is re-acquired with the IO write request in the request buffer, to ensure that the processing of the corresponding IO write request can be resumed after the exclusive permission of the cache line is restored.

In a more specific optional implementation, the request buffer of the IO agent module for buffering IO write requests and the memory proxy queue (MPQ) of the memory agent module may have the same address matching logic, that is, the request buffer of the IO agent module needs to add the same address matching processing as the MPQ of the memory agent module, where the MPQ of the memory agent module is a queue used for processing and managing memory requests, and is used for temporarily storing and scheduling memory access requests. Thus, when the IO agent module receives an inquiry request corresponding to a cache line, the IO agent module can set the state of the cache line at the corresponding address in the entry to an invalid state; and based on the address matching mechanism, which is the address matching logic of the request buffer of the IO agent module (same as the MPQ of the memory agent module), the IO agent module can realize mutual query between the write address of the IO write request and the state of the corresponding cache line, so that when the state of the cache line corresponding to the IO write request becomes an invalid state, the state of the IO write request is marked as an interrupted state, and when the state of the cache line corresponding to the IO write request is restored to the exclusive state, the continued processing of the corresponding IO write request is resumed.

That is, when an inquiry conflict occurs before Evict Data Full, for the received inquiry request, the IO agent module sets the state of the cache line corresponding to the inquiry request in the entry to an invalid state, and checks whether there is an uncompleted corresponding IO write request in the request buffer according to the address matching mechanism; in response to an uncompleted corresponding IO write request being present, the IO agent module can set the state of the corresponding IO write request to an interrupted state; further, after re-obtaining the exclusive permission of the cache line, the IO agent module can restore the state of the cache line in the entry to the exclusive state, and resume the continued processing of the corresponding IO write request according to the address matching mechanism, that is, when the send order of the IO write request arrives, on the basis that the cache line exclusive permission of the cache line write operation of the IO write request has been acquired, send a full write data request corresponding to the cache line write operation.

It should be further explained that at any time after the IO agent module acquires the exclusive permission of a complete cache line and before the IO agent module sends an Evict Data Full request, as long as the IO agent module acquires an inquiry request for the cache line, the IO agent module needs to set the state of the cache line to an invalid state and reset the process of acquiring the exclusive permission of the cache line. The following situations may specifically occur:
after acquiring the exclusive permission of the cache line and before sending the Evict Data Full request, in response to no inquiry request for the cache line being received, the IO agent module can maintain the exclusive permission of the cache line until the Evict Data Full request is sent, and the IO agent module does not need to re-acquire the exclusive permission of the cache line at this time;
before sending the Evict Data Full request, the IO agent module may need to re-acquire the exclusive permission of the cache line once; after acquiring the exclusive permission of the cache line and before sending the Evict Data Full request, in response to an inquiry request for the cache line being received once, the IO agent module needs to reset the process of acquiring the exclusive permission of the cache line once; after re-obtaining the exclusive permission of the cache line, until the Evict Data Full request is sent, and the IO agent module does not receive any inquiry request for the cache line, then the IO agent module can maintain the exclusive permission of the cache line until the Evict Data Full request is sent; and
before sending the Evict Data Full request, the IO agent module may need to re-acquire the exclusive permission of the cache line multiple times; for example, after the IO agent module resets the process of acquiring the exclusive permission of the cache line once and before the Evict Data Full request is sent, an inquiry request for the cache line is received again, then the IO agent module needs to reset the process of acquiring the exclusive permission of the cache line again; the above process may be repeated multiple times before the IO agent module sends the Evict Data Full request, that is, the IO agent module needs to re-acquire the exclusive permission of the cache line multiple times.

That is, before sending the Evict Data Full request, each time the IO agent module receives an inquiry request for the cache line, the exclusive permission of the cache line acquired by the IO agent module will be invalidated, and the IO agent module needs to reset the process of acquiring the exclusive permission of the cache line to re-acquire the exclusive permission of the cache line until the Evict Data Full request is sent.

In a further optional implementation, after the IO agent module sends a full write data request (such as an Evict Data Full request) corresponding to the cache line write operation, the IO agent module may further acquire an inquiry request of the slave agent module about the cache line. The inquiry request is triggered by an access to the cache line by other master agent module, that is, an inquiry conflict occurs after Evict Data Full. Specifically, after the IO agent module sends a full write data request (such as an Evict Data Full request) and before the IO agent module receives response information corresponding to the full write data request (such as an Evict Data Full request) of the slave agent module, the IO agent module may receive an inquiry request for the cache line sent by the slave agent module, where the time when the slave agent module sends the inquiry request is earlier than the time when the full write data request (such as an Evict Data Full request) arrives at the slave agent module, but later than the time when the IO agent module sends the full write data request (such as an Evict Data Full request); in this case, the IO agent module can send a corresponding inquiry response to release the exclusive permission of the cache line, and the inquiry response carries the full write data of the cache line, to facilitate the slave agent module to feed back the full write data written by the IO agent module into the cache line when responding to other master agent module, which ensures data consistency of the computer system.

Since the time when the full write data request (such as an Evict Data Full request) arrives at the slave agent module is later than the time when the slave agent module sends the inquiry request, the full write data request (such as an Evict Data Full request) is interrupted by the inquiry. Therefore, when the IO agent module subsequently acquires response information (such as TgtRsp information) from the slave agent module for the inquiry response, the IO agent module can send response information carrying a clearance (Cancel) mark (such as SrcRsp information carrying a Cancel mark) to the slave agent module, to clear the cache line write operation corresponding to the full write data request (such as an Evict Data Full request). This is because the full write data of the full write data request (such as an Evict Data Full request) has been carried in the inquiry response returned to the slave agent module, and there is no need for performing the repeated data operations.

It should be noted that for the inquiry conflict after Evict Data Full, since the IO agent module has sent the full write data request (such as an Evict Data Full request), the IO agent module has carried the full write data to be written by the full write data request (such as an Evict Data Full request) in the inquiry response. Therefore, when the IO agent module performs an inquiry response in the form of a data response, the writing of the full write data of the cache line has been indirectly completed. Thus, the IO agent module does not need to re-acquire the exclusive permission of the cache line, and subsequently, based on the TgtRsp information of the slave agent module, the IO agent module only needs to indicate the slave agent module to clear the corresponding cache write operation.

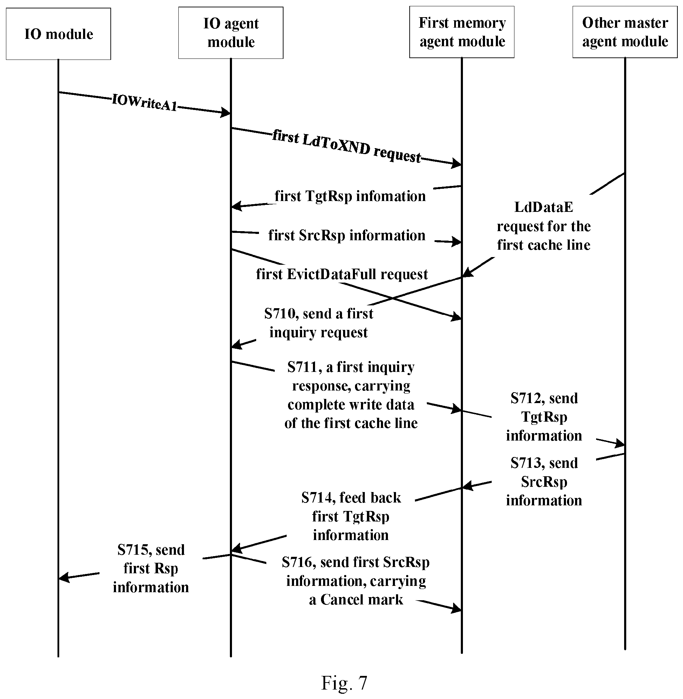

For ease of understanding, taking the example of the example in Fig. 5 where the IO agent module receives an inquiry request for the first cache line after sending the first Evict Data Full request, Fig. 7 exemplarily illustrates another example diagram of a write request processing method provided by an embodiment of the present disclosure. To simplify the explanation, the content in Fig. 7 related to Fig. 5 can be referred to accordingly. Specifically, after the IO agent module sends the first Evict Data Full request, the process exemplified in Fig. 7 includes the following steps.

In step S710, the first memory agent module sends a first inquiry request corresponding to the first cache line to the IO agent module.

After the IO agent module sends the first Evict Data Full request and before the first Evict Data Full request arrives at the first memory agent module, the first memory agent module receives an LdDataE request of the other master agent module for the first cache line. Thus, the other master agent module sends an LdDataE request for the first cache line to the first memory agent module, which triggers a first inquiry request, where the time when the LdDataE request for the first cache line sent by the other master agent module arrives at the first memory agent module is later than the time when the IO agent module sends the first Evict Data Full request and earlier than the time when the first Evict Data Full request arrives at the first memory agent module. Thus, since the IO agent module has not received the first Evict Data Full request when receiving the LdDataE request of the other master agent module for the first cache line, the first memory agent module sends a first inquiry request corresponding to the first cache line to the IO agent module, that is, the time when the first memory agent module sends the first inquiry request is earlier than the time when the first Evict Data Full request arrives at the first memory agent module but later than the time when the IO agent module sends the first Evict Data Full request.

In step S711, the IO agent module sends a first inquiry response to the first memory agent module and carries the full write data of the first cache line.

When the IO agent module sends the first Evict Data Full request, the data of the first cache line is marked as globally visible. Before the first memory agent module responds to the first Evict Data Full request, the other master agent module initiates an access request to the first cache line, requesting for reading or modifying the data of the first cache line, and causing the IO agent module to acquire a first inquiry request of the first memory agent module for the first cache line. At this time, since the data of the first cache line is visible in the global range, the IO agent module (the IO agent module can be regarded as the IO request port of the IO module) must respond to the first inquiry request, carry the full write data of the first cache line in the first inquiry response, and feed back the first inquiry response to the first memory agent module. That is, at this time, the first inquiry response is both a state response and a data response of the cache line. The IO agent module needs to represent that the exclusive permission of the first cache line has been released through the first inquiry response and the full write data of the first cache line is carried in the first inquiry response, to ensure data consistency of the computer system.

Further, since the IO agent module identifies that the first Evict Data Full request in the Victim stage is inquired at this time, it is necessary to subsequently inform the first memory agent module to mark the Victim transaction corresponding to the first Evict Data Full request as Cancel.

In step S712, the first memory agent module sends TgtRsp information to the other master agent module.

After acquiring the first inquiry response sent by the IO agent module, the first memory agent module can confirm that the IO agent module has released the exclusive permission of the first cache line, so the first memory agent module can authorize the exclusive permission of the first cache line to the other master agent module and send corresponding TgtRsp information to the other master agent module; since the request initiated by the other master agent module to the first memory agent module is an LdDataE request, and the first inquiry response further carries the full write data of the first cache line, the TgtRsp information sent by the first memory agent module to the other master agent module further carries the full write data of the first cache line, i.e., the write data result of the first Evict Data Full request of the IO agent module for the first cache line, thereby ensuring the ordering of IO write requests and further ensuring data consistency of the computer system.

In step S713, the other master agent module sends SrcRsp information to the first memory agent module.

In step S714, the first memory agent module feeds back first TgtRsp information to the IO agent module.

The first inquiry response is a data response, and after the first memory agent module completes the operation of the other master agent module, the first memory agent module can feed back the first TgtRsp information corresponding to the first cache line to the IO agent module.

In step S715, the IO agent module sends first Rsp information to the IO module.

In step S716, the IO agent module sends first SrcRsp information to the first memory agent module, and the first SrcRsp information carries a Cancel mark to clear the cache line write operation corresponding to the first Evict Data Full request.

After the first Evict Data Full request is interrupted by a inquiry and after the IO agent module receives the first TgtRsp information fed back by the first memory agent module, the IO agent module needs to send SrcRsp information carrying a Cancel mark (i.e., the first SrcRsp information carrying a Cancel mark) to the first memory agent module, to inform the first memory agent module to cancel the original Victim operation of the first Evict Data Full request, thereby ensuring that the Victim transaction of the first Evict Data Full request is canceled after being interrupted by the inquiry (because the full write data of the first Evict Data Full request has been carried in the first inquiry response returned to the first memory agent module), to avoid repeated or unnecessary data operations.

It should be explained that in the case of an inquiry conflict after Evict Data Full, the above steps relate to the management and matching for IO write requests, so the request queue (REQ queue) must have a function of matching with cache line addresses, especially when the Victim operation stage is interrupted by an inquiry, the IO agent module needs to match the corresponding Victim transaction in the REQ queue to correctly handle the inquiry conflict. Further, since Victim transactions need special processing when being interrupted by the inquiry conflict, and the entire flow from the acquisition of an exclusive permission to the confirmation of TgtRsp information needs to be tracked in the request queue, therefore, to satisfy high bandwidth requirements, the depth of the request queue (REQ queue) needs to be increased.

In an optional implementation, from the perspective of the slave agent module, after the slave agent module feeds back the exclusive permission response information corresponding to the exclusive permission request to the IO agent module and before the slave agent module acquires the full write data request corresponding to the cache line write operation sent by the IO agent module, in response to an access request of the other master agent module to the cache line being acquired, the slave agent module sends an inquiry request for the cache line to the IO agent module; then, the slave agent module acquires the corresponding inquiry response fed back by the IO agent module and processes the access request of other master agent module, which is classified into two cases.

Case 1: if the IO agent module has not sent the full write data request when acquiring the inquiry request, the inquiry response indicates that the exclusive permission of the cache line has been released, and does not carry data; at this time, the slave agent module processes the access request of the other master agent module, such as authorizing the exclusive permission of the cache line to the other master agent module and feeding back existing data, and the slave agent module will receive the exclusive permission request of the cache line corresponding to the cache line write operation resent by the IO agent module, and further the slave agent module can re-authorize the exclusive permission of the cache line to the IO agent module and re-feed back the exclusive permission response information to the IO agent module;
Case 2: if the IO agent module has sent the full write data request when acquiring the inquiry request, the inquiry response indicates that the exclusive permission of the cache line has been released, and carries the full write data corresponding to the cache line; at this time, the slave agent module can process the access request of the other master agent module based on the full write data corresponding to the cache line fed back by the inquiry response, and feed back response information for the inquiry response to the IO agent module, then receive the response information carrying a clear mark sent by the IO agent module to clear the cache line write operation corresponding to the full write data request.

In a further optional implementation, among the IO write requests acquired by the IO agent module from the IO module, there may be a plurality of IO write requests with an address conflict, i.e., a plurality of IO write requests whose cache write operations correspond to the same cache line. Based on this, the IO agent module needs to introduce a conflict detection mechanism for cache line addresses. For the IO write requests acquired by the IO agent module, the IO agent module needs to perform address matching on the IO write requests to detect whether there is an uncompleted preceding IO write request that performs the writing operation on the same cache line. For example, in the request queue, address matching is performed on the IO write requests stored in the request queue, to detect whether there is an uncompleted preceding IO write request that performs the writing operation on the same cache line. In response to a plurality of IO write requests that perform the writing operation on the same cache line, that is, the cache line addresses of the cache line write operations of the plurality of IO write requests are the same, it is regarded as a plurality of IO write requests with an address conflict. Thus, for the plurality of IO write requests with the address conflict, the IO agent module needs to mark subsequent IO write requests as a blocked state according to the acquiring order of the IO write requests, and after the processing of the preceding IO write requests are completed, the IO agent module can process subsequent IO write requests, so that the plurality of IO write requests with the address conflict can be processed in order. For example, for the plurality of IO write requests with the address conflict, the exclusive permission of the cache line corresponding to the preceding IO write request is acquired first, and when the send order of the preceding IO write request arrives, the full write data request corresponding to the cache line write operation of the preceding IO write request is sent, and further after the execution of the full write data request corresponding to the cache line write operation of the preceding IO write request is completed, subsequent IO write requests can acquire the exclusive permission of the corresponding cache line, and so on.

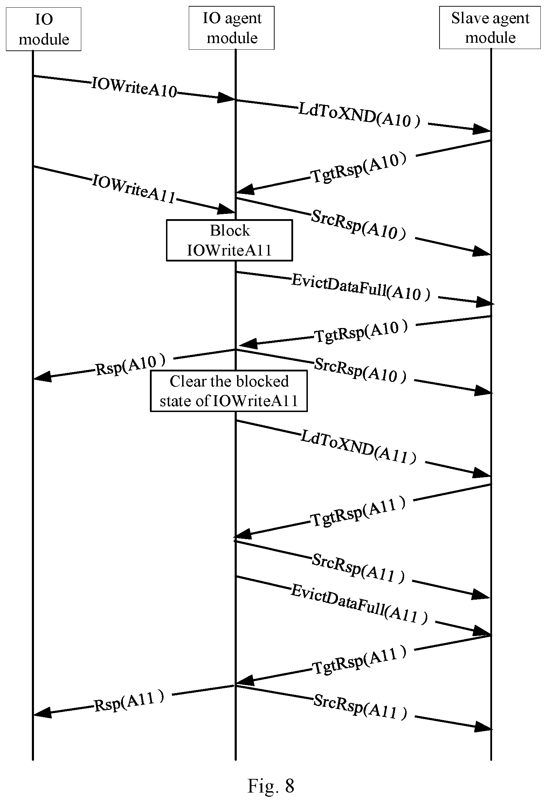

For ease of understanding, Fig. 8 exemplarily illustrates another example diagram of a write request processing method provided by an embodiment of the present disclosure. The relevant content of the example in Fig. 8 may refer to the partial description in the previous part, and the details will not be further elaborated. In the example of Fig. 8, the IO WriteA10 and the IO WriteA11 are IO write requests with an address conflict, that is, the cache line addresses of the IO Write A10 and the IO WriteA11 are the same, both taking the cache line write operation as a full cache line write operation for example.

As shown in Fig. 8, the IO agent module acquires the IO WriteA10, initiates an LdToXND (A10) request to the slave agent module, and discloses the exclusive permission of the cache line corresponding to the IO WriteA10; the slave agent module returns the TgtRsp (A10) information to confirm that the exclusive permission of the cache line corresponding to the IO WriteA10 has been authorized to the IO agent module; after the IO agent module confirms the exclusive permission of the cache line corresponding to the IO WriteA10, the IO agent module returns the SrcRsp (A10) information to the slave agent module.

After the IO agent module returns the SrcRsp (A10) information and before the IO agent module sends the Evict Data Full (A10) request, the IO agent module acquires the IO WriteA11 sent by the IO module. The IO agent module detects and finds that the cache line address of the IO WriteA11 is the same as that of the preceding IO WriteA 10, and since the IO agent module is still processing the IO WriteA10, the IO agent module triggers an address conflict of the IO write request and marks the subsequent IO WriteA11 as a blocked state (for example, marks the IO WriteA1 1 as the blocked state in the request queue), thus waiting for the preceding IO WriteA 10 to be processed before processing the subsequent IO WriteA11. That is, by blocking the IO WriteA11, the IO agent module can ensure the ordering of a plurality of IO write requests with an address conflict, avoid concurrent modifications to the same cache line, and prevent data inconsistency problems.

Thus, the IO agent module sends the Evict Data Full (A10) request corresponding to the IO WriteA10, representing that the data of the cache line can be written and globally visible; after the slave agent module confirms that the Evict Data Full (A10) request has been executed, the slave agent module feeds back TgtRsp (A10) information to the IO agent module, and then the IO agent module feeds back Rsp (A10) information to the IO module and SrcRsp (A10) information to the slave agent module, representing that the write operation of the IO WriteA10 has been completed.

After the processing of the preceding IO WriteA10 is completed, the IO agent module clears the blocked state of the IO WriteA11 with an address conflict and sends the LdToXND (A11) request corresponding to the IO WriteA11 to request the exclusive permission of the cache line. The subsequent processing of IO WriteA11 can refer to the previous description and the information suffixed with (A11) in Fig. 8, which will not be elaborated here.

It can be seen that the IO agent module can ensure the in-order execution of write operations on the same cache line through a manner of blocking and queuing processing. For a plurality of IO write requests with an address conflict, subsequent IO write requests will be unblocked and acquire processing permission only after the preceding IO write requests are completed. Further, in order to satisfy the sequential requirements of a plurality of IO write requests with the address conflict, the request queue of the agent module needs to have sufficient depth to accommodate the blocked IO write requests, thereby ensuring maximum bandwidth utilization and performance.

As an optional implementation, when the IO module initiates a plurality of IO write requests, the IO agent module can store the IO write requests in order in the request queue and attempt to acquire the exclusive permission of the cache lines corresponding to the IO write requests; in the case of no address conflict, the exclusive permissions of the cache lines of the plurality of IO write requests can be acquired out of order, that is, the exclusive permission requests are pre-occupy the cache lines, and the actual data writing has not occurred yet. Therefore, the exclusive permission requests for the cache lines corresponding to the plurality of IO write requests can be sent out of order. As long as the IO agent module executes the write operations on the cache lines (i.e., sends Evict Data Full requests) in the order of the IO write requests after acquiring the exclusive permission of the cache lines, the embodiment of the present disclosure allows out-of-order processing of exclusive permission requests to accelerate the process of acquiring a permission, thereby avoiding delays caused by sequential waiting and improving parallelism.

Further, read operations of the same request flow may be processed out of order. Specifically, for a plurality of read operations of the same request flow, there is no strict dependency between them because read operations do not change data, so there is no need for strict ordering; that is, read operations do not modify data in the cache line, so the read operations will not cause data consistency problems. Therefore, read operations is allowed to be processed out of order, which helps to accelerate data reading, improve the parallelism of the transmission network, and thus enhance overall performance.

Further, the cache line write operation corresponding to the Evict Data Full request is a Victim (eviction) write operation, that is, evicting (Victim) the full write data of the cache line and writing the full write data into the memory to make the full write data visible to the other master agent module. Thus, Evict Data Full requests corresponding to Victim write operations need to be sent in order, that is, the Evict Data Full requests are sent in the send order of the corresponding IO write requests, especially for a plurality of consecutive IO write requests, so as to ensure that the order of finally written data is consistent.

When the send order of the IO write request arrives, the corresponding Evict Data Full request needs to be sent accordingly. At this time, in response to the exclusive permission of the cache line being lost or not acquired, the associated subsequent IO write requests need to be blocked until the exclusive permission of the cache line of the current IO write request is successfully acquired; that is, when the send order of the IO write request arrives, in response to the exclusive permission of the cache line corresponding to the cache line write operation of the IO write request being lost or not acquired, the associated subsequent IO write requests need to be blocked until the exclusive permission of the cache line corresponding to the cache line write operation of the IO write request is successfully acquired and the corresponding full write data request is sent.

For example, when it is the turn for a certain IO write request to be sent, in response to the corresponding cache line failing to acquire the exclusive permission (for example, being set to an invalid state by an inquiry operation, etc.), the Evict Data Full request corresponding to the IO write request cannot complete the Victim write operation; to ensure the ordering, the IO agent module needs to block the processing of subsequent IO write requests in the same request flow, that is, suspend the processing of the subsequent IO write requests in the same request flow, and resume the processing of the subsequent IO write requests in the same request flow only after the preceding IO write request in the same request flow successfully acquires the exclusive permission of the corresponding cache line and completes the execution of the Evict Data Full request. The IO write requests in the same request flow are associated and have sequential requirements, for example, the IO write requests in the same request flow are a plurality of consecutive IO write requests (such as a plurality of IO write requests with consecutive addresses). In this way, the IO agent module can use the blocking mechanism to ensure that when a certain Victim write operation is not completed, the subsequent Victim write operations for the same request flow will not overwrite previous data, thereby avoiding data order confusion.

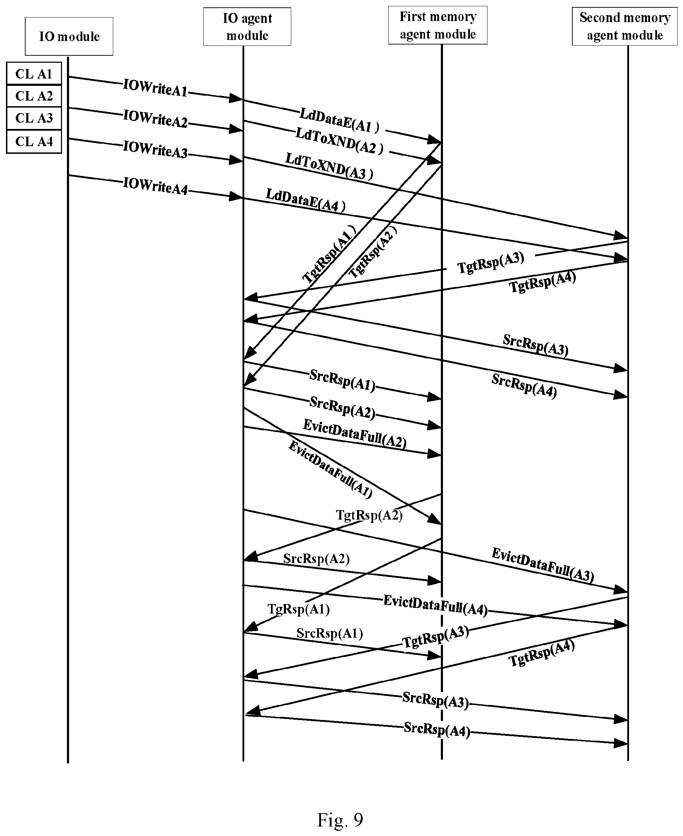

For example, taking a plurality of consecutive IO write requests as an example, Fig. 9 exemplarily shows another example diagram of a write request processing method provided by an embodiment of the present disclosure. The relevant content of the example in Fig. 9 may refer to the description in the previous part, and the details will not be further elaborated.

As shown in Fig. 9, the IO module sends a plurality of consecutive IO WriteA1, IO WriteA2, IO WriteA3, and IO WriteA4 to the IO agent module. Each IO write request corresponds to writing one cache line, i.e., CL A1, CL A2, CL A3, and CL A4. The IO WriteA1 and the IO Write A2 are for the first memory, and the IO WriteA3 and the IO Write A4 are for the second memory; the IO agent module can store the IO WriteA1, the IO WriteA2, the IO WriteA3, and the IO WriteA4 in the request queue; the plurality of consecutive IO write requests above belong to one same request flow, are associated with each other, and need to perform data writing in order.

Thus, the IO agent module sends an LdDataE (A1) request corresponding to the IO WriteA1 and an LdToXND (A2) request corresponding to the IO WriteA2 to the first memory agent module, taking the IO WriteA1 writing data into a part of the CL A1 as an example and taking the IO WriteA2 writing data into the complete CL A2 as an example here; and the IO agent module sends an LdToXND (A3) request corresponding to the IO WriteA3 and an LdDataE (A4) request corresponding to the IO WriteA4 to the second memory agent module, taking the IO WriteA3 writing data into all of the CL A3 as an example and taking IO WriteA4 writing data into a part of the CL A4 as an example here.

Correspondingly, the first memory agent module feeds back TgtRsp (A1) information and TgtRsp (A2) information to the IO agent module to respond to the LdDataE (A1) request and the LdToXND (A2) request respectively, and further the IO agent module feeds back corresponding SrcRsp (A1) information and SrcRsp (A2) information to the first memory agent module.

Similarly, the second memory agent module feeds back TgtRsp (A3) information and TgtRsp (A4) information to the IO agent module to respond to the LdToXND (A3) request and the LdDataE (A4) request respectively, and further the IO agent module feeds back corresponding SrcRsp (A3) information and SrcRsp (A4) information to the second memory agent module.

In the operation of acquiring an exclusive permission, the IO agent module does not require a strict order. The IO agent module can send the above-mentioned exclusive permission requests corresponding to the IO WriteA1, the IO WriteA2, the IO WriteA3 and the IO WriteA4 simultaneously or out of order; correspondingly, the response information corresponding to the above-mentioned exclusive permission requests, i.e., TgtRsp (A1) information, TgtRsp (A2) information, TgtRsp (A3) information, and TgtRsp (A4) information, can be returned to the IO agent module out of order.

When the IO agent module sends Evict Data Full requests, the IO agent module needs to perform in the send order of the IO write requests, that is, the IO agent module sends Evict Data Full requests in order, marks the data of the cache line as globally visible, and enters the Victim writing stage; for example, the IO agent module sends the Evict Data Full request (A1), the Evict Data Full request (A2), the Evict Data Full request (A3), and the Evict Data Full request (A4) in order; when a certain Evict Data Full request needs to be sent, in response to the exclusive permission of the cache line corresponding to the Evict Data Full request being lost (e.g., being set to an invalid state by an inquiry), the IO agent module needs to suspend the processing of subsequent IO write requests in the request flow until the cache line corresponding to the Evict Data Full request re-acquires the exclusive permission.

Further, after each Evict Data Full request is executed and completed, the IO agent module receives corresponding TgtRsp information, such as TgtRsp (A1) information, TgtRsp (A2) information, TgtRsp (A3) information and TgtRsp (A4) information, and the IO agent module sends corresponding SrcRsp information, such as SrcRsp (A1) information, SrcRsp (A2) information, SrcRsp (A3) information and SrcRsp (A4) information.

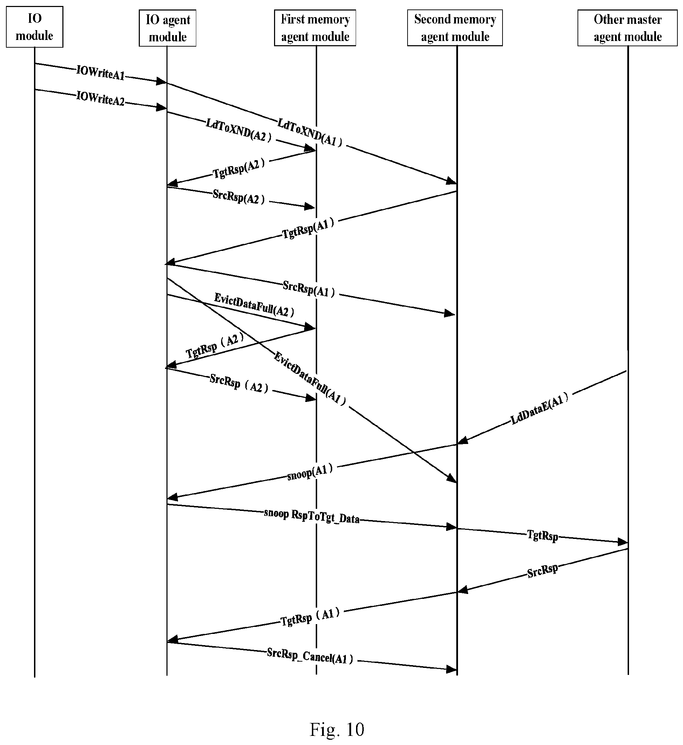

In a further example, to facilitate the explanation of the global ordering of the solution provided by the embodiment of the present disclosure, Fig. 10 exemplarily illustrates another example diagram of a write request processing method provided by an embodiment of the present disclosure. The relevant content of the example in Fig. 10 may refer to the description in the previous parts, and the details will not be further elaborated.

As shown in Fig. 10, the IO module sends the IO WriteA1 and the IO WriteA2 to the IO agent module. Taking the IO WriteA1 and the IO WriteA2 both writing data into complete cache lines as an example, although the IO WriteA2 arrives at the IO agent module later than the IO WriteA1 in order, since the acquiring of the exclusive permission of the cache line can be performed out of order, the IO WriteA2 may first complete the acquiring of the exclusive permission of the cache line; for example, in the example of Fig. 9, although the LdToXND (A1) request corresponding to the IO WriteA1 is sent earlier than the LdToXND (A2) corresponding to the IO WriteA2, because the IO WriteA1 is for the second memory and the IO WriteA2 is for the first memory, the out-of-order processing mechanism and the delay in the transmission path of the transmission network for the first memory agent module and the second memory agent module may cause the IO WriteA2 to complete the acquiring of the exclusive permission of the cache line earlier than the IO WriteA1, that is, the TgtRsp (A2) information is returned to the IO agent module earlier than the TgtRsp (A1) information, and correspondingly, the IO agent module sends the SrcRsp (A2) information earlier than the SrcRsp (A1) information.

After the IO agent module acquires the exclusive permission of the cache lines of the IO WriteA1 and the IO WriteA2, the IO agent module must send the Evict Data Full (A1) request of the IO WriteA1 and the Evict Data Full (A2) request of the IO WriteA2 in order, that is, the Evict Data Full (A1) request is sent first, and the Evict Data Full (A2) request is sent later; that is, the Victim write operation must strictly follow the order to ensure the global consistency of write data and flags. Although the transmission path may cause the global visibility of the IO WriteA1 and the IO WriteA2 to be out of order, the Evict Data Full (A1) request of the IO WriteA1 and the Evict Data Full (A2) request of the IO WriteA2 must be sent in order.

Due to the impact of the transmission path delay, the Evict Data Full (A2) request is executed and completed first, and thus completes the globally visible state first, that is, the data written by the Evict Data Full (A2) request is visible earlier than the data written by the Evict Data Full (A1) request. At this time, the other master agent module may detect that the flag of the IO WriteA2 has been updated and the data of the IO WriteA1 associated with the IO WriteA2 is attempted to be read, so that the other master agent module initiates an LdDataE (A1) request to attempt to access the data of the cache line written by the IO WriteA1, and further the second memory agent module can feed back a corresponding inquiry (A1) request to the IO agent module. Since the IO agent module has sent the Evict Data Full (A1) request at this time, the IO agent module will carry the full write data of the cache line written by the IO WriteA1 in the corresponding inquiry response information, i.e., inquiry RspToTgt_Data information. After the full write data of the cache line written by the IO WriteA1 is returned to the second memory agent module through the inquiry response, the IO agent module no longer needs to execute the original Victim write operation of the Evict Data Full (A1) request, so after the IO agent module receives the TgtRsp (A1) information fed back by the second memory agent module, the IO agent module can send SrcRsp (A1) information carrying a Cancel mark (i.e., SrcRsp_Cancel (A1) information) to the second memory agent module, to inform the second memory agent module to cancel the Victim write operation of the Evict Data Full (A1) request, thereby avoiding repeated writing, optimizing the bandwidth of the computer system, ensuring that the full write data of the cache line written by IO WriteA1 is correctly acquired, and ensuring global consistency.

The embodiments of the present disclosure introduce a cache coherence protocol at the protocol layer of the IO agent module, and realize the order-preserving processing of IO write requests through the corresponding write request processing solution, thereby transferring the order control of data writing from the transmission layer to the protocol layer of the IO agent module, reducing the requirement for order-preserving design of the transmission network, so that the transmission network of computer systems such as multi-core processors does not have to undertake strict order control tasks, and thus releasing the design restrictions of the transmission network of the computer system, allowing the design of the transmission network to be more flexible, and supporting more diverse transmission solutions. Therefore, the embodiments of the present disclosure can improve the performance of the transmission network while ensuring the data consistency of the computer system.

In a further optional implementation, an embodiment of the present disclosure further provides an IO agent module, which connects the corresponding IO module and the transmission network of the computer system. In the embodiment of the present disclosure, the protocol layer of the IO agent module is set with a cache coherence protocol, to manage the IO write requests of the corresponding IO module by means of cache line based on the cache coherence protocol. The IO agent module is configured to:
acquire an IO write request of an IO module;
determine cache line overwrite integrity corresponding to a cache line write operation of the IO write request;
send an exclusive permission request for a cache line corresponding to the cache line write operation based on the cache line overwrite integrity of the cache line write operation to acquire at least an exclusive permission of the cache line; and
when a send order of the IO write request arrives, in response to having acquired the exclusive permission of the cache line corresponding to the cache line write operation of the IO write request, send a full write data request corresponding to the cache line write operation based on full write data corresponding to the cache line; where the full write data request is used to request writing the full write data into the cache line, and the full write data includes at least write data of the cache line write operation.

The IO agent module may be configured to execute the method steps executed by the IO agent module in the write request processing method provided by the embodiments of the present disclosure, and the relevant content may refer to the previous description, which will not be elaborated here.

In a further optional implementation, an embodiment of the present disclosure further provides a slave agent module, which connects the corresponding slave module and the transmission network of the computer system to manage access requests for the slave module. The slave agent module is configured to:
acquire an exclusive permission request sent by an IO agent module, where the exclusive permission request is at least used to request exclusive permission of a cache line, and the exclusive permission request corresponds to cache line overwrite integrity of a cache line write operation corresponding to the cache line;
feed back exclusive permission response information corresponding to the exclusive permission request to the IO agent module;
acquire a full write data request corresponding to the cache line write operation sent by the IO agent module, where the full write data request is used to request writing full write data corresponding to the cache line into the cache line, and the full write data includes at least write data of the cache line write operation; and
schedule the corresponding slave module to execute the full write data request, and feed back response information of the full write data request to an IO agent module.

The slave agent module may be configured to execute the method steps executed by the slave agent module in the write request processing method provided by the embodiments of the present disclosure, and the relevant content can refer to the previous description, which will not be elaborated here.

In a further optional implementation, an embodiment of the present disclosure further provides a computer system, including a plurality of functional modules. Among the plurality of functional modules, the functional module that initiates an access request is a master module, and the functional module that responds to the access request is a slave module. For example, the architecture of the computer system may be combined as shown in Fig. 1. The master module includes an IO module, and the IO module is connected to the transmission network of the computer system through the corresponding IO agent module; and the slave module is connected to the transmission network through the corresponding slave agent module. The IO agent module is the IO agent module provided in the above embodiments of the present disclosure, and the slave agent module is the slave agent module provided in the above embodiments of the present disclosure.

The above describes a plurality of embodiment solutions provided by the embodiments of the present disclosure. The optional methods introduced by each embodiment solution can be combined and cross-referenced without conflict, thereby extending to a plurality of possible embodiment solutions, which can be regarded as the disclosed and published embodiment solutions of the present disclosure.

Although the embodiments of the present disclosure are disclosed as above, the present disclosure is not limited thereto. Any person skilled in the art can make various changes and modifications without departing from the spirit and scope of the present disclosure, so the protection scope of the present disclosure should be subject to the scope defined by the claims.

## Claims

1. A write request processing method, applied to an IO agent module, wherein the IO agent module is configured to, based on a cache coherence protocol, manage an IO write request of a corresponding IO module by means of cache line; and the method comprises:
acquiring an IO write request of an IO module;
determining cache line overwrite integrity corresponding to a cache line write operation of the IO write request;
sending an exclusive permission request for a cache line corresponding to the cache line write operation based on the cache line overwrite integrity of the cache line write operation to acquire at least an exclusive permission of the cache line; and
when a send order of the IO write request arrives, in response to having acquired the exclusive permission of the cache line corresponding to the cache line write operation of the **IO** write request, sending a full write data request corresponding to the cache line write operation based on full write data corresponding to the cache line; wherein the full write data request is used to request writing the full write data into the cache line, and the full write data comprises at least write data of the cache line write operation.

2. The method according to claim 1, wherein the cache line write operation is classified into a full cache line write operation and a partial cache line write operation, and wherein cache line overwrite integrity of the full cache line write operation is fully overwriting a cache line, and cache line overwrite integrity of the partial cache line write operation is partially overwriting a cache line.

3. The method according to claim 2, wherein the sending an exclusive permission request for a cache line corresponding to the cache line write operation based on the cache line overwrite integrity of the cache line write operation to acquire at least an exclusive permission of the cache line, comprises:
in response to the cache line write operation being the full cache line write operation, sending a first exclusive permission request corresponding to the cache line, wherein the first exclusive permission request is used to request the exclusive permission of the cache line and does not read existing data of the cache line;
wherein the full write data corresponding to the cache line is the write data of the cache line write operation.

4. The method according to claim 2, wherein the sending an exclusive permission request for a cache line corresponding to the cache line write operation based on the cache line overwrite integrity of the cache line write operation to acquire at least an exclusive permission of the cache line, comprises:
in response to the cache line write operation being the partial cache line write operation, sending a second exclusive permission request corresponding to the cache line, wherein the second exclusive permission request is used to request the exclusive permission of the cache line and read existing data of the cache line.

5. The method according to claim 4, wherein after reading the existing data of the cache line, the method further comprises:
merging the write data of the cache line write operation with the existing data of the cache line to obtain merged data of the cache line that is used as the full write data corresponding to the cache line.

6. The method according to claim 5, wherein the merging the write data of the cache line write operation with the existing data of the cache line to obtain merged data of the cache line that is used as the full write data corresponding to the cache line comprises:
writing the write data of the cache line write operation into partial bytes of the cache line according to byte enabling information of the cache line write operation, to overwrite partial existing data corresponding to the partial bytes, and form the merged data of the cache line that is used as the full write data corresponding to the cache line; wherein the byte enabling information indicates the partial bytes; and
the method further comprises:
saving the byte enabling information.

7. The method according to any of claims 2-6, wherein the determining cache line overwrite integrity corresponding to a cache line write operation of the IO write request, comprises:
in response to a write data size corresponding to the write data of the cache line write operation being equal to a cache line size, determining the cache line write operation to be the full cache line write operation; and
in response to a write data size corresponding to the write data of the cache line write operation being smaller than a cache line size, determining the cache line write operation to be the partial cache line write operation.

8. The method according to claim 7, wherein the IO write request has one or more cache line write operations, and a cache line write operation that the IO write request has is determined based on a write address and a write data size of the IO write request.

9. The method according to claim 8, wherein when the write address of the IO write request is aligned with a cache line boundary, the cache line write operation that the IO write request has comprises any one of the following:
in response to the write data size of the IO write request being equal to the cache line size, the IO write request having one full cache line write operation;
in response to the write data size of the IO write request being smaller than the cache line size, the IO write request having one partial cache line write operation;
in response to the write data size of the IO write request being greater than the cache line size, and the write data size of the IO write request being an integer multiple of the cache line size, the IO write request having a plurality of full cache line write operations, a quantity of which corresponds to the integer multiple; and
in response to the write data size of the IO write request being greater than the cache line size, and the write data size of the IO write request being not an integer multiple of the cache line size, the IO write request having one partial cache line write operation and at least one full cache line write operation.

10. The method according to any of claims 1-9, further comprising:
after acquiring the exclusive permission of the cache line corresponding to the cache line write operation, marking corresponding permission marking information for the IO write request; and
the method further comprises:
when the send order of the IO write request arrives, checking whether the IO write request is marked with the permission marking information;
in response to the IO write request being marked with the permission marking information, proceeding to a step of the sending a full write data request corresponding to the cache line write operation based on full write data corresponding to the cache line; and
in response to the IO write request being not marked with the permission marking information, when waiting for the IO write request to acquire the exclusive permission, proceeding to the step of the sending a full write data request corresponding to the cache line write operation based on full write data corresponding to the cache line.

11. The method according to any of claims 1-10, wherein the send order of the IO write request corresponds to an acquiring order of the IO write request, and for a plurality of IO write requests without address conflict, the plurality of IO write requests supports out-of-order acquiring of the exclusive permission; and the method further comprises:
storing, in order, request information of an acquired IO write request in a request queue; wherein a storing order of the IO write request in the request queue is the send order, the request queue is further marked with permission marking information of the IO write request, and the permission marking information of the IO write request indicates that the exclusive permission of the cache line corresponding to the cache line write operation of the IO write request has been acquired.

12. The method according to any of claims 1-11, further comprising:
after acquiring the exclusive permission of the cache line corresponding to the cache line write operation and before sending the full write data request corresponding to the cache line write operation, in response to an inquiry request for the cache line being acquired, sending a corresponding inquiry response to release the exclusive permission of the cache line; and
returning to a step of the sending an exclusive permission request for a cache line corresponding to the cache line write operation based on the cache line overwrite integrity of the cache line write operation to acquire at least an exclusive permission of the cache line.

13. The method according to claim 12, further comprising:
when the inquiry request for the cache line is acquired, setting a state of the cache line corresponding to the inquiry request to an invalid state, and checking whether a corresponding IO write request that is uncompleted is present according to an address matching mechanism;
in response to the corresponding IO write request that is uncompleted being present, setting a state of the corresponding IO write request to an interrupted state; and
after re-obtaining the exclusive permission of the cache line, restoring the state of the cache line to an exclusive state, and resuming continued processing of the corresponding IO write request according to the address matching mechanism;
wherein the address matching mechanism is that a request buffer of the IO agent module for buffering the IO write request has same address matching logic as a memory proxy queue of a memory agent module.

14. The method according to any of claims 1-13, further comprising:
after sending the full write data request corresponding to the cache line write operation and before receiving corresponding response information, in response to an inquiry request for the cache line being acquired, sending a corresponding inquiry response to release the exclusive permission of the cache line, and the inquiry response carries the full write data of the cache line;
when response information of the inquiry response is received, sending response information carrying a clear mark to indicate clearing the cache line write operation corresponding to the full write data request.

15. The method according to any of claims 1-14, further comprising:
in response to a plurality of IO write requests having an address conflict, marking subsequent IO write requests as a blocked state according to an acquiring order of the IO write requests until preceding IO write requests have been processed, so that the plurality of IO write requests having the address conflict are processed in order; wherein the plurality of IO write requests having the address conflict is a plurality of IO write requests having a same cache line address.

16. The method according to any of claims 1-15, further comprising:
when the send order of the IO write request arrives, in response to the exclusive permission of the cache line corresponding to the cache line write operation of the IO write request being lost or not acquired, blocking subsequent IO write requests associated with the IO write request until the exclusive permission of the cache line corresponding to the cache line write operation of the IO write request is successfully acquired and the full write data request is sent.

17. A write request processing method, applied to a slave agent module, comprising:
acquiring an exclusive permission request sent by an IO agent module, the exclusive permission request being at least used to request exclusive permission of a cache line, and the exclusive permission request corresponding to cache line overwrite integrity of a cache line write operation corresponding to the cache line;
feeding back exclusive permission response information corresponding to the exclusive permission request to the IO agent module;
acquiring a full write data request corresponding to the cache line write operation sent by the IO agent module, wherein the full write data request is used to request writing full write data corresponding to the cache line into the cache line, and the full write data comprises at least write data of the cache line write operation; and
scheduling a corresponding slave module to execute the full write data request, and feeding back response information of the full write data request to the IO agent module.

18. The method according to claim 17, wherein the acquiring an exclusive permission request sent by an IO agent module, the exclusive permission request being at least used to request exclusive permission of a cache line, and the exclusive permission request corresponding to cache line overwrite integrity of a cache line write operation corresponding to the cache line, comprises:
acquiring a first exclusive permission request sent by the IO agent module, wherein the first exclusive permission request is used to request the exclusive permission of the cache line and does not read existing data of the cache line, and the first exclusive permission request corresponds to the cache line write operation that is a full cache line write operation; and
the feeding back exclusive permission response information corresponding to the exclusive permission request to the IO agent module, comprises:
after authorizing the exclusive permission of the cache line to the IO agent module, feeding back exclusive permission response information corresponding to the first exclusive permission request to the IO agent module, to inform the IO agent module that the exclusive permission of the cache line has been successfully acquired, wherein the exclusive permission response information does not carry the existing data of the cache line;
wherein the full write data corresponding to the cache line is the write data of the cache line write operation.

19. The method according to claim 17, wherein the acquiring an exclusive permission request sent by an IO agent module, the exclusive permission request being at least used to request exclusive permission of a cache line, and the exclusive permission request corresponding to cache line overwrite integrity of a cache line write operation corresponding to the cache line, comprises:
acquiring a second exclusive permission request sent by the IO agent module, wherein the second exclusive permission request is used to request the exclusive permission of the cache line and read existing data of the cache line, and the second exclusive permission request corresponds to the cache line write operation that is a partial cache line write operation; and
the feeding back exclusive permission response information corresponding to the exclusive permission request to the IO agent module, comprises:
after authorizing the exclusive permission of the cache line to the IO agent module, feeding back exclusive permission response information corresponding to the second exclusive permission request to the IO agent module, wherein the exclusive permission response information carries the existing data of the cache line;
wherein the full write data corresponding to the cache line is merged data obtained by merging the write data of the cache line write operation with the existing data of the cache line.

20. The method according to any of claims 17-19, further comprising:
after feeding back the exclusive permission response information corresponding to the exclusive permission request to the IO agent module and before acquiring the full write data request corresponding to the cache line write operation sent by the IO agent module, in response to an access requests of other master agent modules for the cache line being acquired, sending an inquiry request for the cache line to the IO agent module;
acquiring a corresponding inquiry response fed back by the IO agent module, wherein in response to the IO agent module having not sent the full write data request when the inquiry request is acquired, the inquiry response indicates that the exclusive permission of the cache line has been released and does not carry data;
processing the access request of the other master agent module; and
receiving an exclusive permission request for a cache line corresponding to the cache line write operation re-sent by the IO agent module, re-authorizing the exclusive permission of the cache line to the IO agent module, and re-feeding back exclusive permission response information to the IO agent module.

21. The method according to any of claims 17-20, further comprising:
after the IO agent module sends the full write data request corresponding to the cache line write operation and before the full write data request corresponding to the cache line write operation sent by the IO agent module is acquired, in response to an access request of other master agent module for the cache line being acquired, sending an inquiry request for the cache line to the IO agent module;
acquiring a corresponding inquiry response fed back by the IO agent module, wherein in response to the IO agent module having sent the full write data request when the inquiry request is acquired, the inquiry response indicates that the exclusive permission of the cache line has been released and carries the full write data corresponding to the cache line;
processing the access request of the other master agent module based on the full write data corresponding to the cache line; and
after feeding back response information for the inquiry response to the IO agent module, receiving response information carrying a clear mark sent by the IO agent module to clear the cache line write operation corresponding to the full write data request.

22. An IO agent module, wherein the IO agent module connects a corresponding IO module and a transmission network of a computer system, and a protocol layer of the IO agent module is set with a cache coherence protocol to manage an IO write request of the corresponding IO module by means of cache line based on the cache coherence protocol; and the IO agent module is configured to:
acquire an IO write request of an IO module;
determine cache line overwrite integrity corresponding to a cache line write operation of the IO write request;
send an exclusive permission request for a cache line corresponding to the cache line write operation based on the cache line overwrite integrity of the cache line write operation to acquire at least an exclusive permission of the cache line; and
when a send order of the IO write request arrives, in response to having acquired the exclusive permission of the cache line corresponding to the cache line write operation of the IO write request, send a full write data request corresponding to the cache line write operation based on full write data corresponding to the cache line; wherein the full write data request is used to request writing the full write data into the cache line, and the full write data comprises at least write data of the cache line write operation.

23. The IO agent module according to claim 22, wherein the IO agent module being configured to send the exclusive permission request for the cache line corresponding to the cache line write operation based on the cache line overwrite integrity of the cache line write operation to acquire at least an exclusive permission of the cache line, comprises:
in response to the cache line write operation being a full cache line write operation, sending a first exclusive permission request corresponding to the cache line, wherein the first exclusive permission request is used to request the exclusive permission of the cache line and does not read existing data of the cache line;
in response to the cache line write operation being a partial cache line write operation, sending a second exclusive permission request corresponding to the cache line, wherein the second exclusive permission request is used to request the exclusive permission of the cache line and read existing data of the cache line;
wherein the cache line write operation is classified into the full cache line write operation and the partial cache line write operation, cache line overwrite integrity of the full cache line write operation is fully overwriting a cache line, and cache line overwrite integrity of the partial cache line write operation is partially overwriting a cache line.

24. The IO agent module according to claim 22 or 23, wherein the IO agent module is further configured to:
after acquiring the exclusive permission of the cache line corresponding to the cache line write operation and before sending the full write data request corresponding to the cache line write operation, in response to an inquiry request for the cache line being acquired, send a corresponding inquiry response to release the exclusive permission of the cache line; and return to a step of sending the exclusive permission request for the cache line corresponding to the cache line write operation based on the cache line overwrite integrity of the cache line write operation to acquire at least an exclusive permission of the cache line;
and/or,
after sending the full write data request corresponding to the cache line write operation and before receiving corresponding response information, in response to an inquiry request for the cache line being acquired, send a corresponding inquiry response to release the exclusive permission of the cache line, and the inquiry response carries the full write data of the cache line; and when response information of the inquiry response is received, send response information carrying a clear mark to indicate clearing the cache line write operation corresponding to the full write data request.

25. A slave agent module, wherein the slave agent module connects a corresponding slave module and a transmission network of a computer system to manage an access request for the slave module; and the slave agent module is configured to:
acquire an exclusive permission request sent by an IO agent module, wherein the exclusive permission request is at least used to request exclusive permission of a cache line, and the exclusive permission request corresponds to cache line overwrite integrity of a cache line write operation corresponding to the cache line;
feed back exclusive permission response information corresponding to the exclusive permission request to the IO agent module;
acquire a full write data request corresponding to the cache line write operation sent by the IO agent module, wherein the full write data request is used to request writing full write data corresponding to the cache line into the cache line, and the full write data comprises at least write data of the cache line write operation; and
schedule the corresponding slave module to execute the full write data request, and feed back response information of the full write data request to the IO agent module.

26. The slave agent module according to claim 25, wherein the slave agent module is further configured to:
after feeding back the exclusive permission response information corresponding to the exclusive permission request to the IO agent module and before acquiring the full write data request corresponding to the cache line write operation sent by the IO agent module, in response to an access request of other master agent module for the cache line being acquired, send an inquiry request for the cache line to the IO agent module;
acquire a corresponding inquiry response fed back by the IO agent module, wherein in response to the IO agent module having not sent the full write data request when the inquiry request is acquired, the inquiry response indicates that the exclusive permission of the cache line has been released and does not carry data;
process the access request of the other master agent module; and
receive an exclusive permission request for a cache line corresponding to the cache line write operation re-sent by the IO agent module, re-authorize the exclusive permission of the cache line to the IO agent module, and re-feed back exclusive permission response information to the IO agent module.

27. The slave agent module according to claim 25 or 26, wherein the slave agent module is further configured to:
after the IO agent module sends the full write data request corresponding to the cache line write operation and before the full write data request corresponding to the cache line write operation sent by the IO agent module is acquired, in response to an access request of other master agent module for the cache line being acquired, send an inquiry request for the cache line to the IO agent module;
acquire a corresponding inquiry response fed back by the IO agent module, wherein in response to the IO agent module having sent the full write data request when the inquiry request is acquired, the inquiry response indicates that the exclusive permission of the cache line has been released and carries the full write data corresponding to the cache line;
process the access request of the other master agent module based on the full write data corresponding to the cache line; and
after feeding back response information for the inquiry response to the IO agent module, receive response information carrying a clear mark sent by the IO agent module to clear the cache line write operation corresponding to the full write data request.

28. A computer system, comprising a plurality of functional modules, wherein among the plurality of functional modules, a functional module that initiates an access request is a master module, and a functional module that responds to an access request is a slave module; the master module comprises an IO module, and the IO module is connected to a transmission network of the computer system through a corresponding IO agent module; the slave module is connected to the transmission network through a corresponding slave agent module; the IO agent module is the IO agent module according to any one of claims 22-24, and the slave agent module is the slave agent module according to any one of claims 25-27.
